# FASCICULE DE BREVET EUROPEEN

(11) **EP 3 057 767 B1**
(45) Date de publication et mention de la délivrance du brevet: **30.08.2017**
(21) Numéro de dépôt: 14781586.4
(22) Date de dépôt: 09.10.2014
(51) Int. Cl.: B29C 49/56, B29C 49/06, B29C 49/30, B29C 49/48, B29L 31/00

(54) **UNITÉ DE MOULAGE POUR LA FABRICATION DE RÉCIPIENTS COMPORTANT UNE PINCE DE COMPENSATION**
FORMEINHEIT ZUR HERSTELLUNG VON BEHÄLTERN MIT EINEM KOMPENSATIONSGREIFER
MOULDING UNIT FOR THE MANUFACTURE OF CONTAINERS COMPRISING A COMPENSATION GRIPPER

(30) Priorité: 14.10.2013 FR 1359950
(43) Date de publication de la demande: 24.08.2016
(73) Titulaire: Sidel Participations, 76930 Octeville-sur-Mer (FR)
(72) Inventeur: MICHEL, Jocelyn, F-76930 Octeville sur Mer (FR); LECOMTE, Frédéric, F-76930 Octeville sur Mer (FR); ANDREUX, Patrice, F-76930 Octeville sur Mer (FR); DAUDIGNY, Michel, F-76930 Octeville sur Mer (FR)
(74) Mandataire: Grassin d'Alphonse, Emmanuel Jean Marie
(86) Numéro de dépôt international: PCT/EP2014/071646
(87) Numéro de publication internationale: WO 2015/055499

(56) Documents cités:
- EP-A1- 1 880 826
- DE-A1-102007 022 638
- FR-A1- 2 963 580
- US-A1- 2011 177 192

## Description

L'invention concerne une unité de moulage pour la fabrication de récipients comportant une pince de compensation.

L'invention concerne plus particulièrement une unité de moulage pour la fabrication de récipients à partir de préformes en matière thermoplastique, ladite unité de moulage comportant au moins :
- un châssis portant un moule qui comporte au moins deux éléments de moulage respectivement montés chacun dans un porte-moule associé,
- l'un au moins desdits porte-moules étant montés mobiles en rotation par rapport à l'autre autour d'un axe vertical de rotation entre une position ouverte et une position fermée du moule dans laquelle lesdits éléments de moulage sont réunis l'un contre l'autre par des faces d'appui respectives définissant un plan de joint vertical d'orientation longitudinale et délimitent ensemble une cavité de moulage ;
- des moyens de formage pour l'introduction à l'intérieur de la préforme d'au moins un fluide sous pression en vue du moulage du récipient correspondant dans la cavité,
- un mécanisme de commande de l'ouverture et de la fermeture du moule pour commander le déplacement de l'un au moins des porte-moules entre lesdites positions ouverte et fermée du moule,
- et des moyens de compensation commandés sélectivement pour exercer un effort de compensation, tendant à serrer l'un contre l'autre les éléments de moulage au niveau dudit plan de joint et à s'opposer aux efforts que le fluide sous pression exerce sur les éléments de moulage lors du moulage d'un récipient à partir d'une préforme.

On connaît de l'état de la technique une unité de moulage de ce type qui est destinée à être montée sur une machine (encore appelée "souffleuse") et utilisée pour la fabrication de récipients à partir de préformes en matière thermoplastique.

La fabrication de récipients (bouteilles, flacons, pots, etc.) en matière thermoplastique comme le PET (Polyéthylène Téréphtalate) est réalisée dans une telle unité de moulage par formage d'une préforme chaude au moins au moyen d'au moins un fluide sous pression introduit par son col à l'intérieur de la préforme.

Le formage d'un récipient à partir d'une préforme chaude est notamment obtenu par soufflage ou par étirage-soufflage, en utilisant par exemple de l'air comme fluide sous pression.

Une préforme en matière thermoplastique destinée à la fabrication d'un récipient est obtenue par moulage par injection puis la préforme injectée est ultérieurement conditionnée thermiquement, généralement dans un four, afin d'obtenir une préforme chaude apte à subir l'opération de formage.

En variante, la préforme chaude est obtenue par extrusion et l'opération de formage avantageusement mise en oeuvre dans une unité de moulage directement à l'issue de sa fabrication.

A titre d'exemple non limitatif, on pourra se reporter au document WO-99/03667 qui décrit une installation pour la fabrication de récipients stériles.

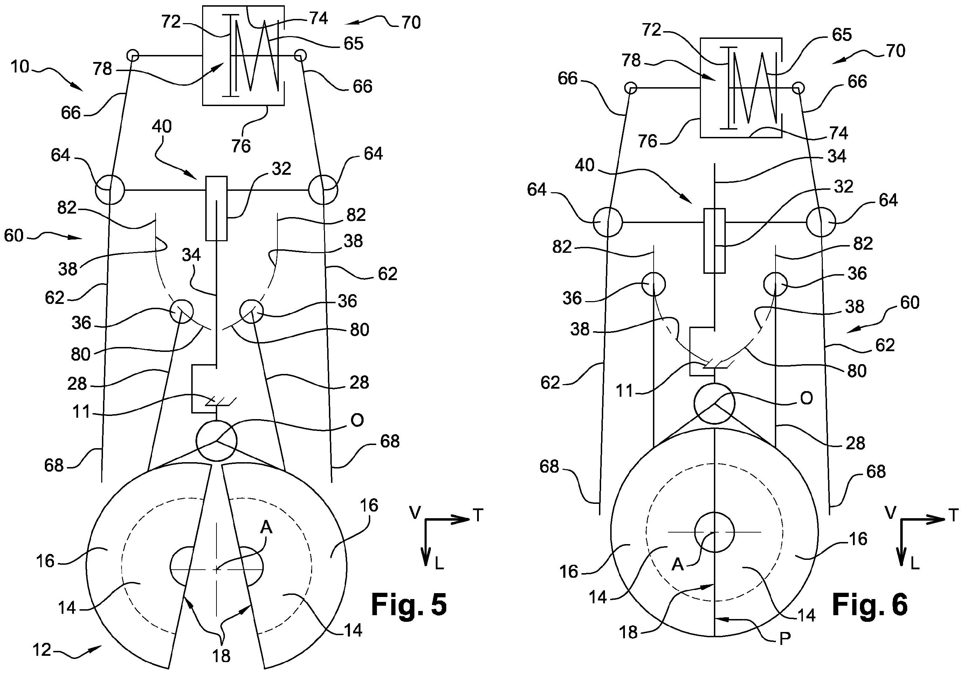

La figure 5 du document représente plus particulièrement une installation comportant une machine (ou "souffleuse") équipée de plusieurs unités de moulage qui sont réparties circonférentiellement sur tout le pourtour d'un carrousel de la machine, ledit carrousel étant animé d'un mouvement rotatif autour d'un arbre vertical formant l'axe principal de la machine.

Dans cet exemple, la fabrication d'un récipient est obtenue à partir d'une préforme chaude dont le corps est préalablement conditionné thermiquement dans un four, puis le corps de la préforme est introduit à l'intérieur du moule de l'une des unités de moulage par des moyens de transfert. L'air de soufflage sous pression est ensuite introduit à l'intérieur de la préforme par le col pour former un récipient correspondant à la cavité de moulage que délimitent les éléments de moulage réunis.

Les pressions mises en jeu lors du soufflage du récipient sont particulièrement élevées, atteignant selon les applications des valeurs pouvant aller jusqu'à 30 ou 40 bars.

Il en résulte que, en plaquant la paroi du corps de la préforme contre l'empreinte de la cavité de moulage lors du soufflage, l'air sous pression exerce alors d'importants efforts sur la surface de l'empreinte de chacun des éléments de moulage.

C'est l'une des raisons pour laquelle, l'unité de moulage est pourvue d'un dispositif de verrouillage dont les moyens de verrouillage sont, en position verrouillée, aptes à maintenir les porte-moules en position fermée lors du moulage du récipient par soufflage ou par étirage-soufflage.

Les moyens de verrouillage du moule en position fermée présentent cependant toujours un jeu de fonctionnement. L'existence d'un tel jeu de fonctionnement des moyens de verrouillage et les efforts exercés sur les éléments de moulage par le fluide sous pression lors du soufflage du récipient provoquent l'écartement l'un de l'autre des deux éléments de moulage et l'apparition d'un jeu.

Ainsi, l'écartement des éléments de moulage qu'autorisent les moyens de verrouillage dans la limite du jeu de fonctionnement et que provoquent les efforts exercés par l'air sous pression introduit dans la cavité de moulage, conduit à l'apparition d'un jeu au niveau du plan de joint entre les éléments de moulage, lequel jeu au mieux se crée lors du soufflage au pire s'accroît car il existe également un jeu fonctionnel résultant du montage des éléments de moulage dans les porte-moules.

Or, l'apparition d'un tel jeu ou jour entre les deux éléments de moulage lors du formage est un problème qui a des conséquences sur la qualité du récipient final obtenu.

Les principales conséquences sont d'une part la résistance mécanique du récipient final qui s'en trouve affectée au niveau du plan de joint et, d'autre part, l'esthétisme du récipient final avec un défaut visuel consistant en la présence au niveau dudit plan de joint d'un "trait" caractéristique sur le récipient.

Ce problème a aussi des incidences sur l'unité de moulage, plus particulièrement sur les porte-moules portant les éléments de moulage qui sont soumis à des déformations mécaniques importantes du fait de la présence d'un tel jeu.

Une solution connue de l'état de la technique consiste, pour résoudre ce problème en réduisant au moins l'apparition de ce jeu entre les éléments de moulage, à équiper l'unité de moulage de moyens, dits de compensation, formés par une chambre.

La chambre de compensation est une chambre étanche à volume variable qui est interposée entre l'un seulement des éléments de moulage et le porte-moule associé.

On rappellera ci-après le fonctionnement d'une telle chambre de compensation. Pour de plus amples détails sur une telle solution, on pourra par exemple se reporter aux documents FR-2.659.265 ou EP-1.880.826 donnés toutefois à titre non limitatif pour illustrer l'état de la technique.

Un autre état de la technique apparenté est décrit dans le document FR-A-2963580.

La chambre de compensation est destinée à être alimentée sélectivement en air sous pression suivant un cycle de compensation qui est synchronisé avec la fabrication du récipient.

Lors de la fabrication d'un récipient, la compensation est mise en oeuvre après la fermeture et le verrouillage de l'unité de moulage et avant le moulage du récipient.

Tel que rappelé précédemment, le formage du récipient est notamment réalisé par soufflage (ou par étirage-soufflage) d'une préforme chaude au moyen d'un fluide de soufflage sous pression, lequel fluide est généralement constitué par de l'air.

En variante, le formage est réalisé, avec ou sans étirage, au moins en partie par un liquide sous pression, tel que le liquide destiné à être conditionné dans le récipient fabriqué.

La mise en pression de la chambre de compensation est obtenue en l'alimentant en air sous pression. Sous l'effet de la pression, il en résulte une expansion de la chambre de compensation interposée entre l'élément de moulage et le porte-moule qui provoque un déplacement relatif de l'élément de moulage par rapport au porte-moule.

L'expansion de la chambre de compensation tend à écarter l'un de l'autre les porte-moules, à ouvrir l'unité de moulage. Cependant, les porte-moules sont maintenus en position fermée de l'unité par des moyens de verrouillage.

Grâce aux moyens de verrouillage, l'effort découlant de la mise en pression de la chambre de compensation va donc principalement s'exercer par réaction sur l'élément de moulage adjacent qui se trouve poussé en direction de l'autre élément de moulage situé en vis-à-vis.

L'effort de compensation résultant de la mise en pression de la chambre tend par conséquent à serrer l'un contre l'autre lesdits éléments de moulage au niveau du plan de joint.

Un premier effet de l'effort de compensation appliqué est donc de supprimer entre les faces d'appui des éléments de moulage tout jeu qui pouvait existait auparavant au niveau du plan de joint.

Ainsi, la compensation permet le rattrapage du jeu entre les éléments de moulage au niveau du plan de joint délimité par les faces d'appui des éléments de moulage autour de l'empreinte de moulage réalisée en creux et correspondant au récipient.

Ce premier effet de la compensation perdure pour autant que, lors du soufflage du récipient, l'effort de poussée appliqué par l'air sous pression contenu dans la chambre de compensation est supérieur aux efforts appliqués par l'air de soufflage sur la surface de la cavité de moulage.

L'effort de compensation obtenu est principalement déterminé par la surface de la chambre de compensation et la pression de l'air qui y est introduit, et l'effort de compensation nécessaire est notamment fonction de la surface de la cavité de moulage et de la pression de soufflage.

Les valeurs de pression de l'air utilisé pour la chambre de compensation sont donc élevées, jusqu'à 40 bars, comme le sont celles de l'air de soufflage utilisé pour mouler le récipient.

Lorsque la chambre de compensation est mise en pression, l'effort de compensation s'oppose aux efforts de sens contraire que la pression de l'air de soufflage de la préforme applique sur la cavité et qui tendent à écarter à nouveau l'un de l'autre les éléments de moulage.

Le deuxième effet de l'effort de compensation appliqué est donc celui d'un contre-effort capable de s'opposer aux efforts exercés par l'air de soufflage et ce faisant de limiter voir d'empêcher que n'apparaisse un jeu entre les éléments de moulage au niveau du plan de joint.

Dans une unité de moulage comportant une chambre de compensation, l'effort de compensation résultant de la mise en pression s'applique sur la face externe de l'élément de moulage, soit la face opposée à l'empreinte formant la cavité. L'effort de poussée s'applique sur la surface de la face en contact avec la chambre de compensation.

Une fois le récipient formé, le cycle de compensation s'achève par un échappement pour remettre la chambre de compensation à la pression atmosphérique et permettre le déverrouillage puis l'ouverture du moule afin d'en extraire le récipient fabriqué.

Grâce à une telle chambre de compensation, on améliore la qualité du récipient final fabriqué en réduisant à tout le moins le jeu entre les éléments de moulage au niveau du plan de joint de manière que lesdits éléments de moulage soient jointifs et leurs faces respectives accolées, tout particulièrement pendant le moulage du récipient.

Cependant, une telle solution ne donne pas entière satisfaction et présente des inconvénients.

L'intégration d'une telle chambre de compensation à une unité de moulage n'est pas toujours aisée et s'avère au final très coûteuse. Son implantation pose des problèmes de coûts de maintenance pour garantir la fiabilité de l'étanchéité.

La mise en oeuvre du cycle de compensation a également des incidences sur les cadences de fabrication atteintes sur une machine.

L'utilisation d'air sous pression comme fluide pour la compensation et sa mise à l'échappement après chaque cycle de fabrication d'un récipient se traduit par une consommation importante d'énergie pour obtenir la mise sous pression de l'air, en raison notamment de la nature compressible de l'air.

La chambre de compensation provoque également d'importantes contraintes mécaniques tant sur les moyens de verrouillage et que sur les porte-moules de l'unité de moulage.

De telles contraintes mécaniques exigent par conséquent une attention particulière lors de la conception et du choix des matériaux pour limiter les déformations.

Le but de la présente invention est notamment de remédier aux inconvénients précités et de proposer une nouvelle solution permettant de réaliser de manière simple, économique et fiable la fonction de compensation dans une unité de moulage de récipients à partir de préformes en matière thermoplastique.

Dans ce but, l'invention propose une unité de moulage du type décrit précédemment, caractérisée en ce que les moyens de compensation sont formés par au moins une pince qui agit sur les porte-moules pour les serrer l'un contre l'autre en position fermée de l'unité de moulage et exercer ledit effort de compensation.

L'effort de compensation appliqué par la pince permet d'une part de supprimer, au niveau du plan de joint, la présence tout jeu entre les éléments de moulage en serrant l'un contre l'autre les porte-moules et d'autre part, ledit effort de compensation étant supérieur aux efforts exercés par l'air sous pression sur les éléments de moulage, de les maintenir accolés et jointifs lors de formage du récipient à partir de la préforme sans que ne puisse apparaître de jeu au niveau du plan de joint.

Par comparaison avec une chambre de compensation selon l'état de la technique, ladite au moins une pince de compensation agit directement sur les porte-moules et non plus sur l'un des éléments de moulage.

Avantageusement, l'effort de compensation est exercé par la pince en direction du plan de joint et de manière symétrique sur chacun des porte-moules. Cet effort de compensation est donc un effort de poussée appliqué suivant un plan transversal médian qui est orthogonal au plan de joint et qui, de préférence, passe par l'axe principal du moule.

Avantageusement, les moyens de compensation sont associés à l'unité de moulage et, par comparaison avec une chambre de compensation, les éléments de moulage qui sont destinés à y être montés sont alors identiques entre eux et indépendants dès lors que lesdits éléments de moulage n'interviennent plus directement dans la mise en oeuvre de la fonction de compensation.

Les moyens de compensation formés par la pince demeurent en permanence associés aux porte-moules d'une unité de moulage tandis que les éléments de moulage d'une unité donnée sont eux susceptibles d'être changés en fonction du récipient à fabriquer.

Grâce au fait que les moyens de compensation soient associés à l'unité de moulage, tant la conception que la fabrication des éléments de moulage destinés à y être montés s'en trouvent simplifiées, comme sont aussi raccourcis également leurs temps de montage et de démontage dans l'unité.

Avantageusement, la fonction de compensation est réalisée à moindre coût puisque les moyens de compensation équipent une unité de moulage et non plus chacun des éléments de moulage pouvant y être montés pour fabriquer différents récipients.

Avantageusement, la consommation énergétique pour réaliser la mise sous pression du fluide dans les moyens d'actionnement associés à la pince de compensation est moindre que celle d'une chambre de compensation.

Avantageusement et par comparaison à une chambre de pression, l'effort de compensation appliqué par la pince est obtenu de manière simple et précise en commandant notamment la pression du fluide alimentant les moyens d'actionnement, permettant en particulier de faire varier l'effort et de l'adapter pour chaque récipient fabriqué avec une pression de soufflage donnée et d'une contenance déterminée.

Avantageusement, les moyens de compensation assurent également la fonction de verrouillage des porte-moules en position fermée de l'unité.

Grâce à la double fonction de compensation et de verrouillage assurée par les moyens de compensation, les moyens de verrouillage conventionnels de l'unité de moulage agencés à l'avant sont supprimés.

Une telle suppression des moyens de verrouillage présente des avantages, notamment une réduction de la masse en partie avant du moule, facilite l'ouverture du moule comme la sortie du récipient fabriqué hors du moule en position ouverte grâce à quoi les cadences de fabrication sont augmentées.

Avantageusement, la pince de compensation est escamotée longitudinalement vers l'arrière lorsque l'unité de moulage doit être ouverte grâce à quoi on en facilite l'ouverture et améliore la compacité en position ouverte.

Or plus une unité de moulage est compacte et présente un faible encombrement en position ouverte, plus le nombre d'unités de moulage pouvant être implantées circonférentiellement sur une machine rotative d'un diamètre donné augmente et corolairement les capacités de fabrication de récipients de cette machine.

Avantageusement, l'entraînement de la pince de compensation par un élément du mécanisme de commande d'ouverture et de fermeture du moule permet d'obtenir de manière simple et fiable une commande synchrone de la compensation lors du cycle de fabrication du récipient.

Avantageusement, la liaison en déplacement du chariot dudit mécanisme de commande pour former les moyens d'entraînement de la pince de compensation comme ceux du moule du fond permet d'optimiser le fonctionnement dès lors que l'ensemble est commandé au moyen d'une seule et même came.

Tout particulièrement, la synchronisation entre l'ouverture / fermeture du moule et le déplacement de la pince, voir également celui du moule du fond, est obtenu sans notamment nécessiter d'usinages complexes, ni de réglages ou de mises au point particulièrement longs.

Avantageusement, l'effort déterminé appliqué par les moyens d'actionnement associés à la pince pour obtenir ledit effort de compensation est réduit en raison du bénéfice de l'effet amplificateur correspondant au bras de levier.

Grâce à quoi, pour un même effort de compensation, les moyens de compensation selon l'invention offrent en utilisation un meilleur rendement énergétique que ceux d'une chambre de compensation selon l'état de la technique.

Avantageusement, l'air sous pression utilisé lorsque les moyens d'actionnement associés à la pince sont constitués par au moins un vérin pneumatique est recyclé au moins partiellement après chaque cycle de compensation en vue d'une réutilisation.

Selon d'autres caractéristiques de l'invention :
- ledit effort de compensation exercé par la pince sur chacun des porte-moules est un effort de poussée appliqué suivant un plan transversal médian qui est orthogonal au plan de joint et qui passe par l'axe principal du moule ;
- ladite pince comporte deux leviers dont l'un au moins est monté mobile autour de moyens d'articulation respectivement entre au moins une position écartée et une position serrée dans laquelle, le moule occupant ladite position fermée, ladite pince exerce sur les porte-moules ledit effort de compensation afin de les serrer l'un contre l'autre ;
- les moyens d'articulation de la pince sont agencés longitudinalement sur ledit au moins un levier entre une partie arrière et une partie avant libre destinée à exercer ledit effort de compensation de manière à former un levier, dit du premier type ;
- l'un des leviers de la pince est monté mobile en rotation autour d'un pivot vertical et l'autre des leviers de la pince est monté mobile en rotation autour d'un autre pivot vertical de sorte que les deux leviers de la pince sont montés mobiles entre la position écartée et la position serrée d'application de l'effort de compensation ;
- ladite unité comporte des moyens d'actionnement associés à la pince qui sont commandés sélectivement pour appliquer transversalement un effort déterminé sur les leviers de la pince afin d'obtenir ledit effort de compensation ;
- les moyens d'actionnement comportent au moins un vérin, ledit vérin comportant un piston qui est monté coulissant de manière étanche dans un alésage d'un corps du vérin, ledit piston délimitant avec ledit alésage au moins une chambre de commande à volume variable apte à être alimentée sélectivement en fluide sous pression ;
- la pince est montée mobile longitudinalement en translation relativement au moule, la pince étant liée en déplacement à des moyens d'entraînement qui sont commandés pour déplacer sélectivement ladite pince entre au moins :
   - une position non-engagée dans laquelle ledit moule est libre d'occuper la position ouverte et
   - une position engagée dans laquelle au moins une partie de la pince s'étend autour du moule occupant sa position fermée.
- les leviers de la pince délimitent transversalement entre eux, en position écartée, une ouverture à l'avant qui est supérieure à l'encombrement des porte-moules en position fermée de manière que chaque levier présente transversalement par rapport au porte-moule un jeu déterminé grâce auquel la pince en position écartée est susceptible d'être déplacée longitudinalement entre lesdites positions non-engagée et engagée sans entrer en contact avec les porte-moules ;
- lesdits leviers de la pince sont rappelés automatiquement par des moyens de rappel élastique vers l'une des positions parmi lesdites positions écartée et serrée et les moyens d'actionnement commandent le déplacement transversal des leviers de la pince vers l'autre position parmi lesdites positions écartée ou serrée de la pince ;
- lesdits moyens d'entraînement en translation de la pince entre lesdites positions non-engagée et engagée sont constitués par ledit mécanisme de commande pour commander l'ouverture et la fermeture du moule ;
- ledit mécanisme comporte au moins un chariot qui est monté mobile longitudinalement en translation relativement au châssis de l'unité portant le moule et relié audit châssis par des moyens coulissant, ledit chariot étant commandé en déplacement par l'intermédiaire d'un dispositif d'actionnement, respectivement entre une position reculée dans laquelle le moule occupe ladite position ouverte et une position avancée dans laquelle le moule occupe ladite position fermée, ;
- ledit dispositif d'actionnement du chariot du mécanisme de commande de l'ouverture et de la fermeture du moule est du type à came et à suiveur de came pour commander le coulissement du chariot entre lesdites positions avancée et reculée ;
- ledit dispositif d'actionnement du chariot du mécanisme de commande de l'ouverture et de la fermeture du moule comporte au moins un moteur linéaire ;
- chaque porte-moule est relié audit chariot par l'intermédiaire d'au moins une biellette associée dont une extrémité avant est solidaire du porte-moule et dont l'autre extrémité arrière est liée en déplacement au chariot par l'intermédiaire par des moyens d'accouplement ;
- lesdits moyens d'accouplement du type à came et à galet comportent, pour chacune des biellettes, au moins un galet qui est solidaire de l'extrémité arrière de la biellette et coopère avec une came ménagée dans un support solidaire en déplacement dudit chariot, de manière que le déplacement en translation du chariot par le dispositif d'actionnement entraîne simultanément celui de ladite came, laquelle came parcourue par ledit galet solidaire de la biellette provoquant l'ouverture ou la fermeture du moule ;
- ladite came comporte au moins un premier tronçon curviligne pour commander la fermeture ou l'ouverture du moule et un deuxième tronçon rectiligne pour autoriser le déplacement de la pince, relativement au moule en position fermée, entre la position non-engagée et la position engagée ;

Avantageusement, l'unité de moulage est du type dans laquelle le moule comporte un moule du fond du récipient qui, complémentaire desdits éléments de moulage, est monté mobile verticalement en translation entre au moins une position basse et une position haute par l'intermédiaire de moyens d'entraînement associés et lesdits moyens d'entrainement associés au moule du fond sont liés en déplacement au chariot du mécanisme de commande de l'ouverture et de la fermeture du moule par l'intermédiaire de moyens de transmission de manière à commander de manière synchrone le déplacement du moule du fond avec celui de l'ouverture et de la fermeture du moule.

Avantageusement, les moyens de transmission comportent au moins une bielle qui est montée mobile en rotation autour d'un axe transversal qui, solidaire du châssis de l'unité de moulage, est agencé entre une première partie et une deuxième partie de la bielle, la première partie de la bielle étant reliée à un support que comportent les moyens d'entraînement du moule du fond, la deuxième partie de la bielle comportant un galet qui coopère avec une came complémentaire qui est liée en déplacement au chariot du mécanisme.

D'autres caractéristiques et avantages de la présente invention apparaîtront à la lecture de la description détaillée qui va suivre pour la compréhension de laquelle on se reportera aux dessins dans lesquels :

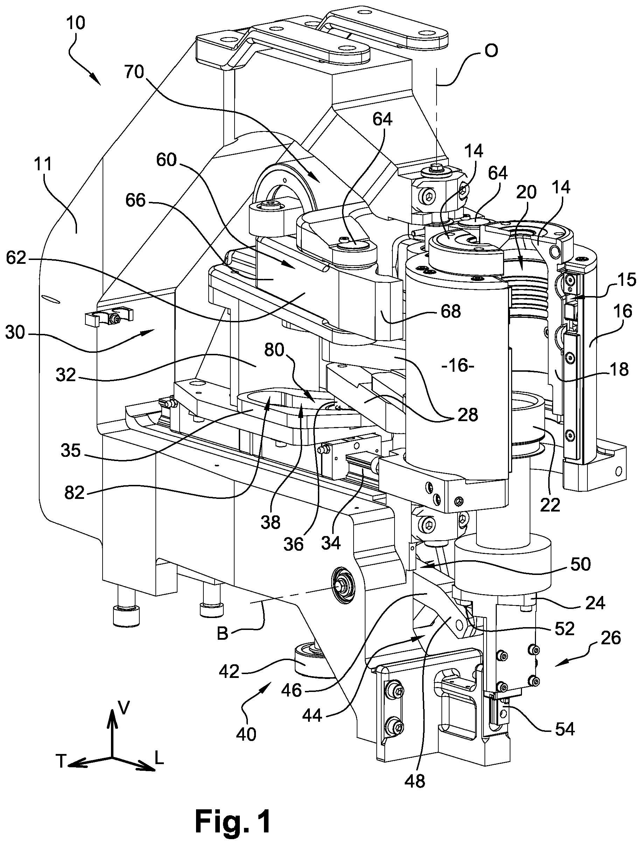

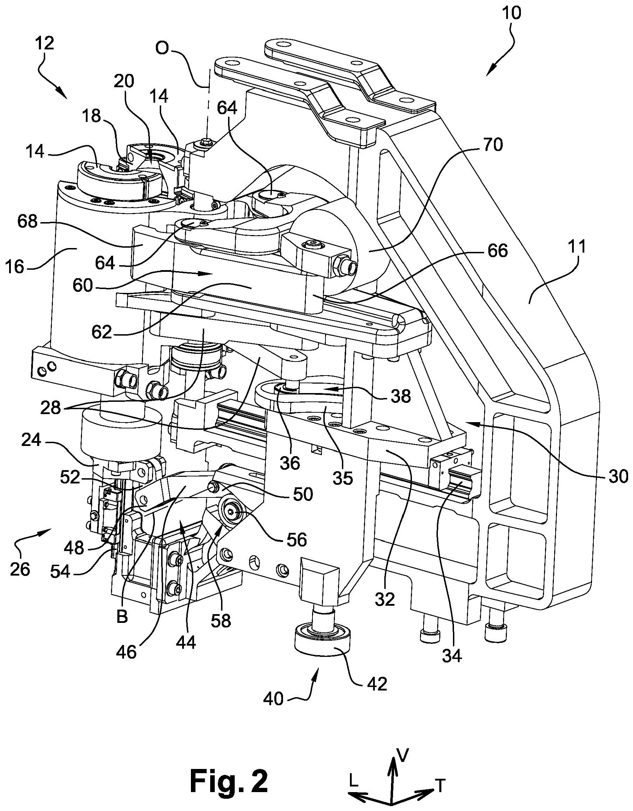

- les figures 1 et 2 sont des vues en perspective de trois quarts respectivement avant et arrière qui représentent une unité de moulage selon un exemple de réalisation de l'invention et qui illustrent le moule de ladite unité en position ouverte et la pince de compensation, dont les leviers sont en position écartée, escamotée vers l'arrière en position non-engagée ;

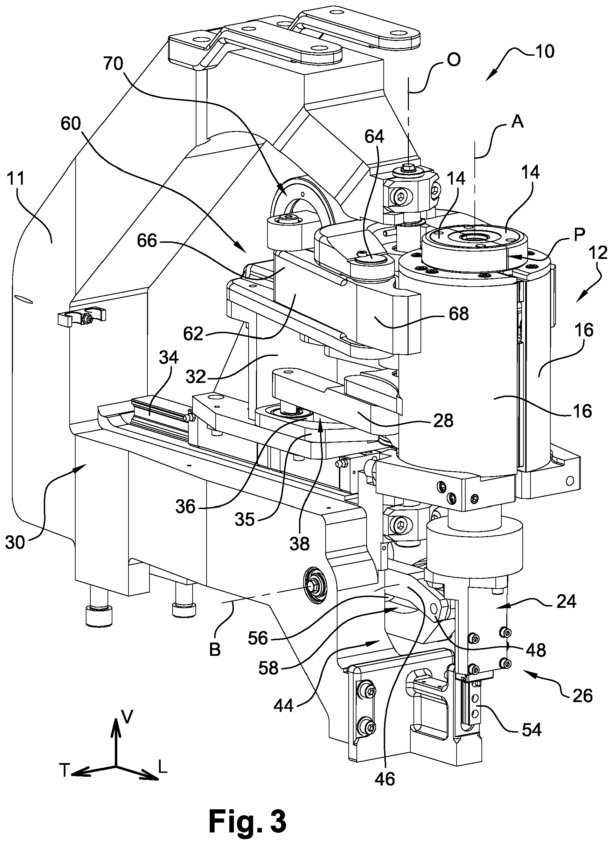

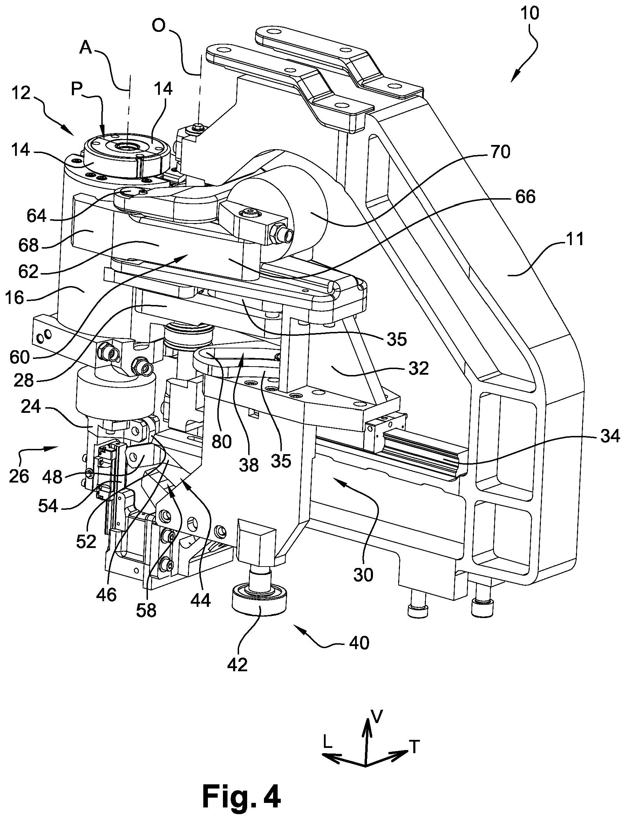

- les figures 3 et 4 sont des vues en perspective de trois quarts respectivement avant et arrière qui représentent l'unité de moulage selon les figures 1 et 2, et qui illustrent le moule de ladite unité en position fermée et la pince de compensation en position engagée avec les leviers en position serrée pour appliquer sur les porte-moules l'effort de compensation ;
- les figures 5 à 8 sont des représentations schématiques qui représentent l'unité de moulage selon l'exemple de réalisation illustré aux figures 1 à 4 afin de décrire le fonctionnement de l'ensemble au cours de la fabrication d'un récipient avec la mise en oeuvre d'une compensation.

Par convention, les directions longitudinale et transversale sont déterminées de manière fixe par rapport aux porte-moules de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" ou "haute" et "basse" en référence à l'orientation verticale et enfin "gauche" ou "droite" et "intérieur" ou "extérieur" en référence à l'orientation transversale.

On a représenté aux figures 1 à 4, un exemple de réalisation d'une unité 10 de moulage pour le fabrication de récipients à partir de préformes en matière thermoplastique.

L'unité 10 de moulage selon cet exemple est plus particulièrement destinée à être montée sur une machine (non représentée) de fabrication de récipients de type rotative.

L'unité 10 de moulage comporte un châssis 11 par l'intermédiaire duquel l'unité 10 est montée solidaire d'un carrousel de la machine qui est entraîné en rotation autour d'un axe central d'orientation verticale.

Une telle unité 10 de moulage constitue l'un des postes de moulage de la machine qui comporte un nombre "n" d'unités de moulage, réparties angulairement de manière régulière autour et à la périphérie du carrousel de la machine.

La fabrication de récipients (bouteilles, flacons, pots, etc.) en matière thermoplastique, comme le PET (Polyéthylène Téréphtalate), est réalisée dans un moule 12 de l'unité 10 de moulage par formage d'une préforme chaude.

De préférence, la machine comportant l'unité 10 de moulage appartient à une installation de fabrication de récipient dans laquelle ladite machine, encore appelée "souffleuse", est associée à un four pour le conditionnement thermique des préformes.

En effet, lorsque les préformes sont préalablement fabriquées par moulage par injection, les préformes doivent alors être ultérieurement chauffées pour en ramollir la matière constitutive avant leur formage en récipient.

En variante, la machine est une machine d'extrusion-soufflage dans laquelle la préforme du récipient en matière plastique est issue d'une extrudeuse, ladite préforme chaude étant transformée en récipient dans l'unité 10 de moulage directement après sa fabrication.

Le formage d'un récipient à partir d'une préforme chaude est notamment obtenu par soufflage ou par étirage-soufflage au moyen d'au moins un fluide sous pression, constitué par exemple par de l'air, ledit au moins un fluide étant introduit par le col à l'intérieur de la préforme placée dans le moule 12 de l'unité 10.

L'unité 10 de moulage comporte un moule 12 qui est porté par le châssis 11 de l'unité 10. Le moule 12 comporte au moins deux éléments 14 de moulage qui sont montés chacun dans un porte-moule 16 associé.

Les deux éléments 14 de moulage sont chacun montés de manière amovible par l'intermédiaire de moyens 15 de fixation dans l'un des porte-moules 16.

Par convention, le premier élément 14 de moulage est monté dans un premier porte-moule 16 situé sur la droite de la figure 1 et le deuxième élément 14 de moulage dans un deuxième porte-moule 16 situé transversalement à l'opposé, sur la gauche de la figure 1.

L'un au moins des porte-moules 16 est monté mobile en rotation par rapport à l'autre porte-moule autour d'un axe O de rotation.

De préférence, les deux porte-moules 16 sont montés mobiles en rotation autour dudit axe O de rotation, lequel axe (O) de rotation s'étend ici verticalement selon le trièdre (L, V, T).

Selon l'exemple de réalisation de l'unité 10 de moulage illustré par les figures 1 à 4, les porte-moules 16 sont montés mobiles entre au moins une position ouverte et une position fermée du moule 12.

La position ouverte (figures 1 et 2) du moule 12 de l'unité 10 correspond à une position dans laquelle notamment une préforme chaude est susceptible d'être introduite dans le moule en vue de sa transformation en un récipient ou encore un récipient fabriqué est susceptible d'être extrait hors du moule 12.

La position fermée (figures 3 et 4) du moule 12 de l'unité 10 correspond à une position dans laquelle les éléments 14 de moulage sont réunis l'un contre l'autre par des faces 18 d'appui respectives définissant un plan P de joint, ledit plan P de joint s'étendant verticalement suivant une orientation longitudinale selon le trièdre (L, V, T).

En position fermée du moule 12, lesdits au moins deux éléments 14 de moulage délimitent ensemble une cavité 20 de moulage correspondant au récipient final à fabriquer et à la réunion d'au moins deux empreintes réalisées en creux dans lesdits au moins deux éléments 14 de moulage.

Dans l'exemple de réalisation illustré par les figures 1 à 4, le moule 12 est réalisé en trois éléments de moulage complémentaires, une telle conception de moule étant notamment adoptée pour former un fond de forme complexe d'un récipient et faciliter le démoulage du récipient.

Le moule 12 comporte un moule 22 du fond du récipient qui, formant un troisième élément complémentaire desdits éléments 14 de moulage, est destiné à former le fond du récipient et à ce titre est encore appelé « fond de moule ».

Le moule 22 du fond est monté sur un support 24 mobile, par exemple un chariot, qui est associé à des moyens 26 d'entraînement grâce auxquels ledit moule 22 du fond est déplacé verticalement entre au moins une position basse et une position haute.

Les moyens 26 d'entraînement commandent le déplacement du support et du dudit moule 22 du fond en synchronisation avec les autres éléments 14 de moulage du moule 12.

Les moyens 26 d'entraînement du support 24 du moule 22 du fond déplacent le moule 22 du fond entre au moins la position basse qui est occupée lorsque le moule 12 est en position ouverte et la position haute qui est occupée en position fermée du moule et dans laquelle les éléments 14 de moulage enserrent ledit moule 22 du fond pour fabriquer le récipient.

L'unité 10 de moulage comporte des moyens (non représentés) de formage pour l'introduction à l'intérieur de la préforme d'au moins un fluide sous pression en vue du moulage du récipient correspondant dans la cavité 20 du moule 12.

De tels moyens de formage par soufflage ou étirage-soufflage notamment sont montés sur la partie sommitale du châssis 11 de l'unité 10 de moulage, à l'aplomb du moule 12.

On se reportera par exemple au document FR-2.764.544 pour de plus amples détails sur des moyens de soufflage ou d'étirage-soufflage précités, encore parfois appelés et réalisés sous la forme d'une tuyère de soufflage.

L'un au moins des porte-moules 16 comporte au moins une biellette 28 par l'intermédiaire de laquelle ledit porte-moule 16 est déplacé entre les positions ouverte et fermée du moule 12.

L'unité 10 de moulage comporte un mécanisme 30 de commande de l'ouverture et de la fermeture du moule 12 pour commander sélectivement le déplacement de l'un au moins des porte-moules 16, ici les deux porte-moules 16, entre lesdites positions ouverte et fermée du moule 12.

Le mécanisme 30 de commande est du type dans lequel l'ouverture ou la fermeture du moule 12 sont obtenues par au moins un organe qui, monté mobile en translation selon la direction longitudinale, coopère avec ladite au moins une biellette 28 reliée à chaque porte-moule 16 pour en provoquer le déplacement entre les positions ouverte et fermée.

L'organe du mécanisme 30 de commande est formé par un chariot 32 qui est monté mobile longitudinalement en translation relativement au châssis 11 de l'unité 10 portant le moule 12.

Le chariot 32 est relié au châssis 11 par l'intermédiaire de moyens 34 coulissant grâce auxquels le chariot 32 coulisse longitudinalement d'arrière en avant et réciproquement.

Les moyens 34 coulissant associés au chariot 32 mobile sont par exemple constitués par au moins une glissière solidaire du châssis 11 de l'unité 10 de moulage.

Chaque porte-moule 16 est relié audit chariot 32 par l'intermédiaire d'au moins une biellette 28 associée dont une extrémité avant est solidaire du porte-moule et dont l'autre extrémité arrière est liée en déplacement au chariot 32 formant l'organe mobile du mécanisme 30.

Le mécanisme 30 comporte des moyens d'accouplement qui interviennent pour lier en déplacement lesdits porte-moules 16 au chariot 32 par l'intermédiaire des biellettes 28.

De préférence, les moyens d'accouplement sont constitués par un système de commande à came et à galet qui lie en déplacement, par l'intermédiaire des biellettes 28, lesdits porte-moules 16 au chariot 32 de manière que le déplacement longitudinal du chariot 32 provoque l'ouverture ou la fermeture du moule 12.

Les moyens d'accouplement comportent au moins un galet 36 qui est solidaire de l'extrémité arrière de ladite au moins une biellette 28 et coopère avec une came 38 ménagée dans un support 35 solidaire en déplacement dudit chariot 32.

Le chariot 32 est respectivement monté mobile entre au moins une position reculée et une position avancée.

La position reculée du chariot 32 correspond à une position dans laquelle le moule 12 occupe la position ouverte et la position avancée du chariot 32 correspond à une position dans laquelle le moule 12 occupe la position fermée.

Le chariot 32 est commandé en déplacement entre lesdites positions reculée et avancée par l'intermédiaire d'un dispositif 40 d'actionnement dudit chariot 32 du mécanisme 30 de commande de l'ouverture et de la fermeture du moule 12.

De préférence, le dispositif 40 d'actionnement est du type à came et à suiveur de came pour commander sélectivement le coulissement du chariot 32 entre lesdites positions avancée et reculée et ce faisant l'ouverture ou la fermeture du moule 12.

Le dispositif 40 d'actionnement comporte au moins un galet 42 qui, solidaire en déplacement dudit chariot 32, forme ledit suiveur de came.

Le galet 42 est destiné à parcourir une came (non représentée) que comporte la machine de moulage équipée de l'unité 10 de moulage lorsque ladite unité 10 de moulage, solidaire par son châssis 11 d'un carrousel d'une telle machine, est animée d'un mouvement de rotation relativement à ladite came.

En variante, ledit dispositif 40 d'actionnement du chariot 32 du mécanisme 30 de commande de l'ouverture et de la fermeture du moule 12 comporte au moins un actionneur apte à agir sur le chariot 32 afin d'en commander le coulissement entre lesdites positions avancée et reculée.

Un tel actionneur associé au chariot 32 est par exemple formé par un vérin double effet ou encore un moteur électrique linéaire, ledit actionneur agissant de préférence sur au moins un organe d'entraînement solidaire du chariot 32 ou en variante directement sur le chariot 32.

Selon une variante préférée, ledit dispositif 40 d'actionnement du chariot 32 du mécanisme 30 de commande de l'ouverture et de la fermeture du moule 12 comporte au moins un moteur linéaire.

Par comparaison avec un actionnement mécanique du type à came et suiveur de came, un moteur linéaire ne nécessite notamment aucun graissage, éliminant ainsi toute intervention régulière d'entretien et supprimant les risques associés de pollution dans l'environnement proche du moule.

Avantageusement, l'utilisation d'un moteur linéaire comme dispositif 40 d'actionnement permet d'obtenir une meilleure reprise d'effort, un actionnement plus précis et une très bonne répétabilité.

Avantageusement, les paramètres de fonctionnement du moteur linéaire sont susceptibles d'être modifiés facilement et rapidement, en particulier si un changement d'application pour la fabrication d'un autre récipient l'exige.

Le déplacement en translation du chariot 32 par ledit dispositif 40 d'actionnement entraîne simultanément celui de la came 38, laquelle came 38 est alors parcourue par le galet 36 qui est solidaire de la biellette 28 ce qui provoque alors l'ouverture ou la fermeture du moule suivant le sens de déplacement longitudinal du chariot 32 entre ses positions reculée et avancée.

Dans l'exemple de réalisation, lesdits moyens 26 d'entrainement du moule 22 du fond du récipient sont constitués par le mécanisme 30 de commande de l'ouverture et de la fermeture du moule 12 et plus particulièrement par le dispositif 40 d'actionnement.

Pour réaliser l'entraînement du moule 22 de fond, des moyens 44 de transmission sont disposés pour lier en déplacement le support 24 du moule 22 de fond au chariot 32 du mécanisme 30.

Avantageusement, le déplacement vertical du moule 22 du fond est commandé de manière synchrone avec celui de l'ouverture et de la fermeture du moule 12.

Le chariot 32 du mécanisme 30 assurant l'entrainement du support 24, il n'est pas nécessaire de prévoir de moyens 26 d'entraînement indépendants associés au support 24 du moule 22 du fond pour en commander le déplacement vertical entre lesdites positions basse et haute.

En variante, les moyens 26 d'entraînement du moule 22 du fond sont formés par des moyens indépendants du mécanisme 30 de commande de l'ouverture et de la fermeture du moule 12, de tels moyens 26 d'entraînement étant commandés de manière distincte mais en synchronisation avec l'ouverture ou la fermeture du moule 12 de l'unité 10.

De préférence, les moyens 44 de transmission comportent au moins une bielle 46 qui est montée mobile en rotation autour d'un axe B transversal qui, solidaire du châssis 11 de l'unité 10 de moulage, est agencé entre une première partie 48 et une deuxième partie 50 de ladite bielle 46.

La première partie 48 longitudinale avant de la bielle 46 est reliée au support 24 du moule 22 du fond, par exemple ici par l'intermédiaire d'une biellette 52 dont une extrémité est liée au support 24 et dont l'autre extrémité est liée à ladite première partie 48 de la bielle 46.

La biellette 52 associée à la bielle 46 assure la transformation du mouvement de rotation de la bielle 46 autour dudit axe B en un mouvement vertical du support 24 qui est monté coulissant relativement au châssis 11, par exemple par l'intermédiaire d'une glissière 54.

La deuxième partie 50 longitudinale arrière de la bielle 46 comporte un galet 56, ici déporté transversalement, qui coopère avec une came 58 complémentaire qui est liée en déplacement au chariot 32 du mécanisme 30.

Le déplacement longitudinal en translation du chariot 32 entre les positions reculée et avancée entraine en déplacement ladite came 58 qui, par coopération avec le galet 56, commande la rotation de la bielle 46 autour dudit axe B.

Le déplacement de la bielle 46 commandé par la came 58 provoque, selon le sens du déplacement du chariot 32, la montée ou la descente dudit support 24 du moule 22 du fond, respectivement entre lesdites positions basse et haute dudit moule 22 du fond.

L'unité 10 de moulage comporte des moyens 60 de compensation qui sont commandés sélectivement pour exercer un effort E de compensation, tendant à serrer l'un contre l'autre les éléments 14 de moulage au niveau dudit plan P de joint et à s'opposer aux efforts que le fluide sous pression exerce sur les éléments 14 de moulage lors du moulage d'un récipient à partir d'une préforme.

Les moyens 60 de compensation sont formés par au moins une pince qui agit sur les porte-moules 16 pour les serrer l'un contre l'autre en position fermée de l'unité 10 de moulage et exercer ledit effort E de compensation.

Les moyens de compensation sont formés par au moins une pince 60, de préférence dans l'exemple de réalisation une pince 60. En variante, les moyens de compensation sont formés par au moins deux pinces qui sont par exemple superposées verticalement et agencées pour s'ouvrir dans une même direction.

Avantageusement, ledit effort E de compensation exercé par la pince 60 sur chacun des porte-moules 16 est un effort de poussée appliqué suivant un plan transversal médian qui est orthogonal au plan P de joint et qui passe par l'axe A principal du moule 12.

L'axe A principal du moule 12 s'étend verticalement et est aligné selon la direction longitudinale avec l'axe O de rotation des porte-moules 16 du moule 12.

En variante, ledit effort E de compensation est exercé par la pince 60 circonférentiellement sur tout ou partie de la surface externe des porte-moules 16, par exemple une portion curviligne.

La pince 60 formant les moyens de compensation est commandée sélectivement entre au moins un état passif et un état actif de compensation dans lequel, le moule 12 occupant ladite position fermée, ladite pince 60 exerce sur les porte-moules 16 ledit effort E de compensation afin de les serrer l'un contre l'autre.

Dans l'exemple de réalisation illustré aux figures 1 à 4, la pince 60 comporte deux leviers 62 dont l'un au moins est monté mobile autour de moyens 64 d'articulation.

De préférence, les deux leviers 62 de la pince 60 sont montés mobiles autour de moyens 64 d'articulation, comme sont également montés mobiles l'un par rapport à l'autre autour de l'axe O de rotation les deux porte-moules 16 et non pas seulement l'un d'eux.

Les leviers 62 de la pince 60 sont respectivement montés mobiles entre au moins une position écartée et une position serrée dans laquelle, le moule 12 occupant ladite position fermée, ladite pince 60 exerce sur les porte-moules ledit effort E de compensation afin de les serrer l'un contre l'autre.

La position écartée correspond à l'état passif des moyens 60 de compensation tandis que la position serrée correspond à l'état actif.

De préférence, la pince 60 comporte des moyens 65 de rappel élastique de l'un au moins des leviers 62 vers ladite position écartée, ici de rappel automatique des deux leviers 62 qui sont montés articulés autour des moyens 64 d'articulation.

Les moyens 65 de rappel élastique des leviers 62 sont par exemple constitués par un ressort interposé entre les leviers 62 et sollicitant lesdits leviers 62 vers la position écartée de la pince 60.

Les moyens 64 d'articulation des leviers 62 de la pince 60 sont constitués par au moins un pivot vertical.

De préférence, les moyens 64 d'articulation sont agencés longitudinalement sur ledit au moins un levier 62 mobile entre une partie 66 arrière et une partie 68 avant libre destinée à exercer ledit effort E de compensation de manière à former un levier, dit du premier type.

Par définition, un levier est dit du premier type lorsque l'axe est agencé entre le point d'application de la force motrice et le point d'application de la force résistante, la balance romaine constitue un exemple d'un tel levier du premier type.

En variante, les moyens 64 d'articulation de la pince 60 sont constitués par au moins un pivot vertical qui est agencé à sur la partie 66 arrière dudit au moins un levier 62, longitudinalement à l'opposé de la partie 68 avant libre destinée à exercer ledit effort E de compensation de manière à former un levier, dit du troisième type.

Par définition, un levier est dit du troisième type lorsque le point d'application de la force motrice est agencé entre l'axe et le point d'application de la force résistante, une pincette constitue un exemple d'un tel levier du troisième type.

Dans l'exemple de réalisation, les deux leviers 62 de la pince 60 sont montés mobiles entre lesdites position écartée et serrée autour de moyens 64 d'articulation distincts.

L'un des leviers 62 de la pince 60 est monté mobile en rotation autour d'un pivot 64 vertical tandis que l'autre des leviers 62 de la pince est monté mobile en rotation autour d'un autre pivot 64 vertical de sorte que chacun des deux leviers 62 est monté autour d'un pivot associé.

En variante, les leviers 62 de la pince 60 sont montés mobiles en rotation autour d'un pivot commun aux deux leviers 62.

L'unité 10 de moulage comporte des moyens 70 d'actionnement associés à la pince 60 qui sont commandés sélectivement pour appliquer transversalement un effort déterminé sur lesdites parties 66 arrière des leviers 62 de la pince 60 afin d'obtenir ledit effort de compensation pour serrer l'un contre l'autre les porte-moules 16 en position fermée et s'opposer aux efforts que le fluide sous pression exerce sur les éléments 14 de moulage lors du moulage d'un récipient à partir d'une préforme.

En variante, avec un levier du troisième type, ladite unité 10 de moulage comporte des moyens 70 d'actionnement associés à la pince 60 qui sont commandés sélectivement pour appliquer transversalement un effort déterminé sur des parties intermédiaires des leviers 62 de la pince situées longitudinalement entre les moyens 64 d'articulation à l'arrière et les parties 68 avant libres d'application dudit effort de compensation.

Avantageusement, que ledit au moins un levier 62 mobile de la pince 60 soit du premier ou troisième type, ledit effort de compensation exercé par la pince 60 sur les porte-moules 16 correspond audit effort déterminé produit par les moyens 70 d'actionnement augmenté d'un effet du bras de levier.

L'effort déterminé appliqué transversalement par lesdits moyens 70 d'actionnement sur les parties 66 arrière des leviers 62 est un effort de poussée dirigé de l'intérieur vers l'extérieur.

Tel est en particulier le cas lorsque les moyens 70 d'actionnement sont disposés transversalement entre la partie 66 arrière des leviers 62 de la pince 60, que lesdits leviers 62 sont montés chacun mobile en rotation autour d'un pivot 64 associé et que la pince 60 forme un levier du premier type.

En variante, ledit effort déterminé appliqué transversalement par lesdits moyens 70 d'actionnement sur les parties 66 arrière des leviers 62 est un effort de traction dirigé de l'intérieur vers l'extérieur.

Tel sera en particulier le cas lorsque les moyens 70 d'actionnement sont disposés transversalement de part et d'autre des parties 66 arrière des leviers 62 d'une pince 60 formant un levier du premier type et que lesdits leviers 62 sont montés chacun mobile en rotation autour d'un pivot 64.

En fonction de l'agencement des moyens 70 d'actionnement par rapport aux leviers 62 de la pince 60, des moyens 64 d'articulation et du type de levier, l'effort déterminé appliqué pour obtenir ledit effort de compensation est soit un effort de poussée, soit un effort de traction.

De la même manière, le sens suivant lequel ledit effort déterminé est appliqué transversalement est fonction de la conception générale de la pince 60 et de l'agencement des moyens 70 d'actionnement qui lui sont associés.

Ainsi ledit effort déterminé appliqué transversalement par lesdits moyens 70 d'actionnement sur les parties 66 arrière des leviers 62 est notamment un effort de traction qui sera dirigé de l'intérieur vers l'extérieur lorsque les moyens 70 d'actionnement sont disposés transversalement entre les parties 66 arrière de leviers 62 d'une pince 60 formant un levier du premier type et dont lesdits leviers 62 sont montés mobiles en rotation autour d'un pivot commun.

Ledit effort déterminé appliqué transversalement par lesdits moyens 70 d'actionnement sur les parties 66 arrière des leviers 62 sera également un effort de traction qui sera dirigé de l'intérieur vers l'extérieur lorsque notamment les moyens 70 d'actionnement sont disposés transversalement entre des parties intermédiaires de leviers 62 d'une pince formant un levier du troisième type dont lesdits leviers 62 sont montés mobiles en rotation autour d'un pivot 64 commun.

En variante, ledit effort déterminé appliqué transversalement par lesdits moyens 70 d'actionnement sur les parties 66 arrière des leviers 62 est un effort de poussée dirigé de l'intérieur vers l'extérieur, lorsque lesdits moyens 70 d'actionnement sont disposés transversalement de part et d'autre des parties 66 arrière de leviers 62 d'une pince 60 formant un levier du premier type et dont les leviers 62 sont montés mobiles en rotation autour d'un pivot 64 commun.

Ledit effort déterminé sera encore un effort de poussée dirigé de l'intérieur vers l'extérieur lorsque, les moyens 70 d'actionnement étant disposés transversalement de part et d'autre des parties intermédiaires de leviers 62, les leviers 62 sont montés mobiles en rotation autour d'un pivot 64 commun et que la pince forme un levier du troisième type.

De préférence, les moyens d'actionnement de la pince 60 comportent au moins un vérin 70.

Le vérin 70 est plus particulièrement représenté de manière schématique sur les figures 5 et suivantes.

Le vérin 70 comporte un piston 72 qui est monté coulissant de manière étanche dans un alésage 74 d'un corps 76 du vérin, ledit piston 72 délimitant avec ledit alésage 74 au moins une chambre 78 de commande à volume variable apte à être alimentée sélectivement en fluide sous pression.

De préférence, les leviers 62 de la pince 60 sont rappelés automatiquement par les moyens 65 de rappel élastique vers l'une des positions parmi lesdites positions écartée et serrée, ici vers la position écartée.

Les moyens d'actionnement formés par ledit au moins un vérin 70 commandent le déplacement transversal des leviers 62 de la pince 60 vers l'autre position parmi lesdites positions écartée ou serrée de la pince, par conséquent ici vers la position serrée.

Avantageusement, les moyens 65 de rappel élastique des leviers 62 en position écartée sont intégrés audit vérin 70 associé à la pince 60.

En variante, les moyens 65 de rappel élastique des leviers 62 en position écartée sont indépendants des moyens 70 d'actionnement.

En présence de moyens 65 de rappel automatique des leviers 62 de la pince 60 en position écartée, les moyens d'actionnement sont avantageusement constitués par au moins un vérin simple effet.

De préférence, les moyens 70 d'actionnement sont constitués par un vérin de type pneumatique.

En variante, les moyens 70 d'actionnement pourraient par exemple être constitués par un vérin électrique ou tout autre moyen d'actionnement approprié.

Dans l'exemple de réalisation, le vérin 70 est agencé transversalement entre lesdites parties 66 arrière des leviers 62 d'une pince formant un levier du premier type et dont lesdits leviers 62 sont chacun montés mobiles autour de pivot 64 distincts.

La partie 66 arrière de l'un des leviers 62 de la pince 60 est liée en déplacement au piston 72 dudit vérin 70 et la partie 66 arrière de l'autre des leviers 62 de la pince 60 est liée en déplacement au corps 76 du vérin 70.

En variante, les moyens 70 d'actionnement commandent le déplacement transversal des leviers 62 de la pince 60 de compensation autour des moyens 64 d'articulation entre ladite position écartée et ladite position serrée de la pince et réciproquement.

Tel sera notamment le cas en l'absence de moyens 65 de rappel élastique et les moyens 70 d'actionnement sont alors par exemple constitués par au moins un vérin double effet, notamment de type pneumatique ou électrique.

Dans l'exemple de réalisation des figures 1 à 4, la pince 60 est avantageusement montée mobile longitudinalement en translation relativement au moule 12 de l'unité 10 de moulage.

La pince 60 est liée en déplacement à des moyens d'entraînement qui sont commandés pour déplacer longitudinalement ladite pince 60 entre au moins une position non-engagée et une position engagée.

La position non-engagée de la pince 60 correspond à une position dans laquelle ledit moule 12 est libre d'occuper la position ouverte et la position engagée à une position dans laquelle au moins une partie de la pince 60 s'étend autour du moule 12 occupant de préférence sa position fermée.

En variante non représentée, la pince 60 est fixe longitudinalement relativement au moule 12 et les leviers 62 de la pince 60 sont montés mobiles en rotation autour des moyens 64 d'articulation, se déplaçant transversalement entre lesdites positions écartée et serrée.

Avantageusement, la pince 60 en position écartée est susceptible d'être sélectivement escamotée longitudinalement vers l'arrière par lesdits moyens d'entraînement associés, grâce à quoi on facilite notamment l'ouverture du moule 12 par exemple en vue de l'extraction du récipient fabriqué.

Avantageusement, l'escamotage de la pince 60 permet également d'améliorer la compacité générale de l'unité 10 de moulage en position ouverte ce qui participe à accroître le nombre de récipients fabriqués.

L'amélioration de la compacité de l'unité 10 de moulage selon la direction transversale permet tout particulièrement d'augmenter le nombre total d'unités 10 de moulage pouvant être implantées sur le carrousel d'une machine d'un diamètre donné.

De préférence, les parties 68 avant des leviers 62 de la pince 60 délimitent transversalement entre eux, en position écartée, une ouverture à l'avant qui est supérieure à l'encombrement des porte-moules 16 en position fermée.

L'écartement entre les leviers 62 est déterminé pour que chaque levier 62 présente transversalement par rapport au porte-moule un jeu "j" déterminé grâce auquel la pince 60 en position écartée est susceptible d'être déplacée longitudinalement entre lesdites positions non-engagée et engagée sans entrer en contact avec les porte-moules 16.

On évite ainsi tout frottement entre la pince 60 et les porte-moules 16 lors du déplacement longitudinal de la pince 60 en vue de réaliser une compensation ou après avoir effectué une compensation lors de la fabrication du récipient.

Avantageusement, les moyens d'entraînement en translation de la pince 60 entre lesdites positions non-engagée et engagée sont constitués par ledit mécanisme 30 de commande pour commander l'ouverture et la fermeture du moule 12.

Dans l'exemple de réalisation, les moyens d'entraînement en translation de la pince 60 sont constitués au moins par le chariot 32 dudit mécanisme 30 qui est monté mobile longitudinalement en translation et commandé en déplacement entre lesdites positions avancée et reculée par l'intermédiaire du dispositif 40 d'actionnement.

Ainsi, lesdites positions non-engagée et engagée de la pince 60 correspondent respectivement à une position reculée et à une position avancée dudit chariot 32 du mécanisme 30 de commande de l'ouverture et de la fermeture du moule.

Avantageusement, l'entraînement de la pince 60 de compensation par un élément du mécanisme 30 de commande d'ouverture et de fermeture du moule 12, tel que le chariot 32, permet d'obtenir de manière simple et fiable une commande synchrone de la mise en place de la pince de compensation au cours du cycle de fabrication du récipient.

Avantageusement, la liaison en déplacement du chariot 32 dudit mécanisme 30 de commande pour former les moyens d'entraînement de la pince 60 comme ceux du moule 22 du fond permet une grande simplification comme une optimisation du fonctionnement, en particulier en raison du fait que l'ensemble est commandé au moyen du dispositif 40 d'actionnement, dans l'exemple par une seule et même came.

Tout particulièrement, la synchronisation entre l'ouverture ou la fermeture du moule 12 et le déplacement de la pince 60, voir également celui du moule 22 du fond, est obtenu de manière simple sans nécessiter notamment d'usinages complexes, ni de réglages de mise au point particulièrement long.

On décrira maintenant plus en détails, en référence aux figures 5 à 8, le fonctionnement de l'unité 10 de moulage selon l'exemple de réalisation des figures 1 à 4 lors de la fabrication d'un récipient avec une compensation réalisée au moyen d'une pince.

On a représenté sur la figure 5, le moule 12 de l'unité 10 de moulage en position ouverte ce qui correspond à la position finale du moule après extraction du récipient et avant l'introduction de la préforme chaude suivante pour la fabrication d'un nouveau récipient.

Le chariot 32 du mécanisme 30 de commande de l'ouverture et de la fermeture du moule 12 occupe alors sa position reculée.

La pince 60 formant les moyens de compensation est en position non-engagée, reculée longitudinalement en arrière par rapport au moule 12, et les leviers 62 occupent leur position écartée.

Dans l'exemple de réalisation, les leviers 62 sont rappelés automatiquement vers ladite position écartée par les moyens 65 de rappel élastique, les moyens 70 d'actionnement étant inactifs.

La chambre 78 de commande du vérin 70 n'est pas alimentée en fluide sous pression de sorte que les leviers 62 ne sont pas sollicités par le vérin 70.

Le mécanisme 30 et son dispositif 40 d'actionnement constituent avantageusement les moyens d'entrainement de la pince 60 qui est liée en déplacement longitudinalement audit chariot 32 du mécanisme 30.

Pour simplifier, le moule 22 du fond n'est pas représenté sur les figures 5 et suivantes mais selon l'exemple de réalisation le mécanisme 30, notamment le chariot 32, et son dispositif 40 d'actionnement en constitue avantageusement les moyens d'entrainement.

Pour réaliser l'entraînement, le moule 22 du fond est lié en déplacement au chariot 32 par l'intermédiaire des moyens 44 de transmission qui transforment le mouvement longitudinal du chariot 32 en un mouvement vertical, respectivement entre les positions basse et haute.

Le moule 22 du fond occupe initialement sa position basse lorsque le moule 12 est en position ouverte.

La première étape consiste à procéder à la fermeture du moule 12 dans lequel une préforme chaude est introduite, parallèlement à la fermeture, pour y être transformée en récipient, notamment par soufflage ou par étirage-soufflage.

L'unité 10 de moulage est liée en rotation par l'intermédiaire du châssis 11 au carrousel de la machine et est entrainée en rotation par ledit carrousel. L'unité 10 de moulage et plus particulièrement le galet 42 des moyens 40 d'actionnement du chariot 32 du mécanisme 30 parcourt une came (non représentée) fixe complémentaire que comporte la machine.

La came de la machine est conformée pour provoquer le déplacement en translation selon la direction longitudinale du chariot 32 et ce faisant commander l'ouverture ou la fermeture du moule 12.

Une came (ou plusieurs tronçons de came) est disposée circonférentiellement autour de l'axe de rotation du carrousel de la machine pour commander successivement la fermeture du moule 12 parallèlement à l'introduction d'une préforme chaude puis, généralement peu avant d'avoir effectué un tour complet, l'ouverture du moule 12 afin de permettre l'extraction du récipient obtenu.

La coopération entre le galet 42 et la came de commande portée par la machine provoque le déplacement en translation du chariot 32 de sa position reculée, représentée à la figure 5, jusqu'à sa position avancée représentée à la figure 6.

Le chariot 32 coulisse longitudinalement vers l'avant en direction du moule 12 par l'intermédiaire de la glissière 34 formant les moyens coulissant destinés à permettre un déplacement relatif du chariot 32 par rapport au moule 12 supporté par le châssis 11.

Le déplacement longitudinalement vers l'avant du chariot 32 s'accompagne de celui du galet 36 de chaque biellette 28 associée à l'un des porte-moule 16, ledit galet 36 parcourt un premier tronçon 80 curviligne de la came 38 qui est ménagée dans le support 35 qui est solidaire du chariot 32.

Tel que représenté sur les figures 5 à 8, ladite came 38 comporte au moins un premier tronçon 80 curviligne pour commander la fermeture ou l'ouverture du moule et un deuxième tronçon 82 rectiligne pour autoriser le déplacement de la pince 60, relativement au moule 12 en position fermée, entre la position non-engagée et la position engagée.

Le déplacement longitudinal du chariot 32, de la position reculée vers la position avancée, provoque la fermeture du moule 12 par l'intermédiaire des biellettes 28 dont la coopération entre le galet 36 et le premier tronçon 80 de la came 38 commande le déplacement.

Comme on peut le voir par comparaison entre les figures 5 et 6, les biellettes 28 passent d'une position inclinée illustrée à la figure 5 et correspondant à la position ouverte du moule 12 à une position longitudinale illustrée à la figure 6 et correspondant à la position fermée du moule 12.

Entre les positions illustrées aux figures 5 et 6, le galet 36 de chaque biellette 38 s'est déplacé d'une extrémité à l'autre du premier tronçon 80 de la came 38, de l'avant vers l'arrière, en provoquant la fermeture du moule 12.

La deuxième étape consiste à amener la pince 60 en position engagée en vue d'appliquer l'effort de compensation.

Bien entendu, une telle deuxième étape découle du fait que la pince 60 selon l'exemple de réalisation est montée mobile longitudinalement par rapport au moule 12 entre une position non-engagée et une position engagée.

Tel qu'illustré sur la figure 6, le moule 12 est fermé cependant la pince 60 n'a pas encore atteinte sa position engagée. La pince 60 occupe en effet une position intermédiaire entre lesdites positions non-engagée et engagée.

La partie 68 avant de chacun des leviers 62 de la pince 60, qui demeurent en position écartée, n'est que partiellement engagée autour des porte-moules 16 du moule 12 fermé.

De préférence, les parties 68 avant des leviers 62 de la pince présentent entre elles un écartement transversal qui est déterminé par rapport au moule 12 pour présenter un jeu « j » entre chacune d'elle et le porte-moule 16 en vis-à-vis grâce à quoi le déplacement de la pince 60 vers sa position engagée s'effectue sans que lesdites parties 68 avant des leviers 62 n'entrent en contact avec les porte-moules 16.

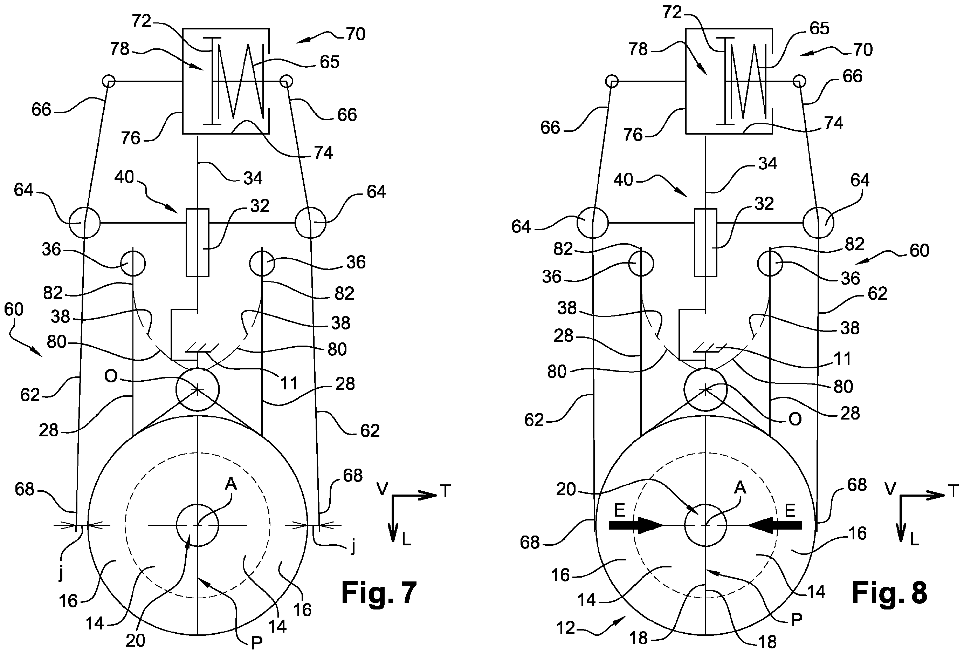

Avantageusement, le deuxième tronçon 82 rectiligne que présente la came 38 permet à la pince 60 de poursuivre son déplacement longitudinal vers l'avant, relativement au moule 12 occupant désormais sa position fermée, jusqu'à atteindre sa position engagée représentée sur la figure 7.

En position engagée de la pince 60, les parties 68 avant des leviers 62 sont positionnées dans un plan transversal médian qui est orthogonal au plan P de joint et qui passe par l'axe A principal du moule 12.

La troisième étape consiste, la pince 60 étant en position engagée illustrée à la figure 7, à commander les moyens 70 d'actionnement pour appliquer par l'intermédiaire de la pince 60 ledit effort E de compensation sur les porte-moules 16 du moule 12 occupant la position fermée.

La chambre 78 de commande du vérin 70 est alimentée en fluide sous pression, par exemple par de l'air dans le cas d'un vérin pneumatique. La mise en pression de la chambre 78 provoque le déplacement transversal du piston 72 qui coulisse de manière étanche dans l'alésage 74 du corps 76 du vérin 70.

Le piston 72 sollicite la partie 66 arrière de l'un des leviers 62, l'autre des leviers 62 étant relié au corps 76 du vérin 70, le déplacement du piston 72 provoque un écartement des parties 66 arrière des leviers 62, qui se déplacent transversalement vers l'extérieur.

Le piston 72 du vérin 70 applique sur les parties 66 arrière des leviers 62 un effort déterminé qui provoque le pivotement de chacun des leviers 62 autour des pivots 64 formant les moyens d'articulation, les leviers 62 passant de la position écartée occupée jusqu'alors à la position serrée représentée à la figure 8.

Le jeu j est annulé lorsque ladite position serrée est atteinte par les leviers 62 de la pince 60.

L'effort appliqué sur le piston 72 par le fluide sous pression introduit dans la chambre 78 de commande est supérieur à l'effort de rappel élastique exercé en sens opposé par les moyens 65 formés par exemple par un ressort intégré au vérin 70.

Dans la position serrée, les parties 68 avant des leviers 62 appliquent sur les porte-moules 16 un effort E de compensation représenté sur la figure 8 qui correspond, dans l'exemple de réalisation, à l'effort déterminé développé par le vérin 70 avantageusement augmenté d'un effet de bras de levier.

L'application par la pince 60 de l'effort E de compensation a pour effet de serrer l'un contre l'autre les porte-moules 16 en position fermée de manière à supprimer, à tout le moins de réduire, tout jeu entre les faces 18 d'appui des éléments 14 de moulage du moule 12 réunies suivant le plan P de joint.

L'effort E de compensation appliqué permet tout d'abord l'annulation d'un tel jeu lorsqu'il existe initialement entre les éléments 14 de moulage.

L'intensité de l'effort E de compensation obtenu grâce au vérin 70 est surtout déterminée pour que les faces 18 d'appui des éléments 14 de moulage restent jointives au niveau du plan P de joint et qu'aucun jeu n'apparaisse ultérieurement entre elles lors du formage de la préforme chaude par soufflage ou par étirage-soufflage en vue d'obtenir le récipient final.

Ainsi, l'effort E de compensation nécessaire est déterminé pour chaque application en fonction des efforts que le fluide sous pression utilisé pour le formage du récipient va appliquer sur la surface des éléments 14 de moulage délimitant la cavité 20.

Les efforts auxquels s'opposent l'effort E de compensation sont notamment fonction de paramètres de fabrication comme la pression du fluide de soufflage et de la surface d'application de ces efforts dès lors qu'elle varie avec la contenance du récipient.

L'application de l'effort E de compensation cesse avantageusement une fois la préforme chaude transformée en récipient et on réalise ensuite, en sens inverse, les étapes décrites précédemment en vue de permettre l'extraction du récipient final.

Une quatrième étape consiste à cesser d'appliquer sur le moule 12 fermé l'effort E de compensation par l'intermédiaire de la pince 60.

Pour ce faire, la chambre 78 de commande du vérin 70 cesse d'être alimentée en fluide sous pression, la pression y diminue jusqu'à solliciter le piston 72 avec un effort inférieur à celui appliqué par le ressort 65 formant les moyens de rappel élastique des leviers 62.

Les leviers 62 de la pince 60 sont rappelés automatiquement vers la position écartée et le jeu « j » entre les parties 68 avant des leviers 62 et les porte-moules 16 rétabli de sorte que l'unité 10 de moulage se retrouve dans une situation identique à celle illustrée par la figure 7 précédente.

Une cinquième étape consiste à escamoter la pince 60 en la déplaçant de sa position engagée vers sa position non-engagée de manière à pouvoir procéder ensuite à l'ouverture du moule 12.

Le chariot 32 est déplacé longitudinalement en translation de l'avant vers l'arrière, de sa position avancée vers sa position reculée, par l'intermédiaire de la came de machine équipée de l'unité 10 de moulage qui commande le déplacement du chariot 32 en agissant sur le galet 42 du dispositif 40 d'actionnement dudit chariot 32.

Le galet 36 de chacune des biellettes 28 parcourt en sens inverse le deuxième tronçon 82 rectiligne de came à l'issue duquel la pince 60 est suffisamment désengagée pour que puisse débuter l'ouverture du moule 12 commandée par le premier tronçon 80 de la came 38.

L'unité 10 de moulage se retrouve dans une situation analogue à celle occupée et représentée précédemment à la figure 6.

Une sixième étape consiste à poursuivre le déplacement du chariot 32 jusqu'à ce que ce dernier atteigne sa position reculée pour laquelle le moule 12 est en position ouverte, soit dans une situation analogue à celle représentée sur la figure 5.

Avantageusement, le mécanisme 30 et le dispositif 40 d'actionnement qui lui est associé formant respectivement les moyens d'entraînement de la pince 60 et du fond 22 de moule, le chariot 32 du mécanisme les entraîne, ramenant la pince 60 en position non-engagée et le fond 22 de moule en position basse.

L'extraction du récipient hors de la cavité 20 de moulage est réalisée lors de l'ouverture du moule 12 et, une fois celle-ci achevée, une nouvelle préforme chaude est susceptible d'être introduite pour débuter la fabrication d'un nouveau récipient.

## Revendications

1. Unité (10) de moulage pour la fabrication de récipients à partir de préformes en matière thermoplastique, ladite unité (10) de moulage comportant au moins :
- un châssis (11) portant un moule (12) qui comporte au moins deux éléments (14) de moulage respectivement montés chacun dans un porte-moule (16) associé,
- l'un au moins desdits porte-moules (16) étant montés mobiles en rotation par rapport à l'autre autour d'un axe (O) vertical de rotation entre une position ouverte et une position fermée du moule dans laquelle lesdits éléments (14) de moulage sont réunis l'un contre l'autre par des faces (18) d'appui respectives définissant un plan (P) de joint vertical d'orientation longitudinale et délimitent ensemble une cavité (20) de moulage ;
- des moyens de formage pour l'introduction à l'intérieur de la préforme d'au moins un fluide sous pression en vue du moulage du récipient correspondant dans la cavité (20),
- un mécanisme (30) de commande de l'ouverture et de la fermeture du moule (12) pour commander le déplacement de l'un au moins des porte-moules (16) entre lesdites positions ouverte et fermée du moule,
- et des moyens (60) de compensation commandés sélectivement pour exercer un effort de compensation, tendant à serrer l'un contre l'autre les éléments (14) de moulage au niveau dudit plan (P) de joint et à s'opposer aux efforts que le fluide sous pression exerce sur les éléments (14) de moulage lors du moulage d'un récipient à partir d'une préforme,
**caractérisée en ce que** lesdits moyens de compensation sont formés par au moins une pince (60) qui agit sur les porte-moules (16) pour les serrer l'un contre l'autre en position fermée de l'unité (10) de moulage et exercer ledit effort de compensation.

2. Unité de moulage selon la revendication 1, **caractérisée en ce que** ledit effort de compensation exercé par la pince (60) sur chacun des porte-moules (16) est un effort de poussée appliqué suivant un plan transversal médian qui est orthogonal au plan (P) de joint et qui passe par l'axe (A) principal du moule (12).

3. Unité de moulage selon l'une des revendications 1 ou 2, **caractérisée en ce que** ladite pince (60) comporte deux leviers (62) dont l'un au moins est monté mobile autour de moyens (64) d'articulation respectivement entre au moins une position écartée et une position serrée dans laquelle, le moule (12) occupant ladite position fermée, ladite pince (60) exerce sur les porte-moules (16) ledit effort de compensation afin de les serrer l'un contre l'autre.

4. Unité de moulage selon la revendication 3, **caractérisée en ce que** les moyens (64) d'articulation de la pince (60) sont agencés longitudinalement sur ledit au moins un levier (62) entre une partie (66) arrière et une partie (68) avant libre destinée à exercer ledit effort de compensation de manière à former un levier, dit du premier type.

5. Unité de moulage selon la revendication 4, **caractérisée en ce que** l'un des leviers (62) de la pince (60) est monté mobile en rotation autour d'un pivot (64) vertical et **en ce que** l'autre des leviers (62) de la pince (60) est monté mobile en rotation autour d'un autre pivot (64) vertical de sorte que les deux leviers (62) de la pince (60) sont montés mobiles entre la position écartée et la position serrée d'application de l'effort de compensation.

6. Unité de moulage selon l'une des revendications précédentes, **caractérisée en ce que** ladite unité (10) comporte des moyens (70) d'actionnement associés à la pince (60) qui sont commandés sélectivement pour appliquer transversalement un effort déterminé sur les leviers (62) de la pince (60) afin d'obtenir ledit effort de compensation

7. Unité de moulage selon la revendication 6, **caractérisée en ce que** les moyens (70) d'actionnement comportent au moins un vérin, ledit vérin (70) comportant un piston (72) qui est monté coulissant de manière étanche dans un alésage (74) d'un corps (76) du vérin, ledit piston (72) délimitant avec ledit alésage (74) au moins une chambre (78) de commande à volume variable apte à être alimentée sélectivement en fluide sous pression.

8. Unité de moulage selon l'une quelconque des revendications précédentes, **caractérisée en ce que** la pince (60) est montée mobile longitudinalement en translation relativement au moule (12), la pince (60) étant liée en déplacement à des moyens d'entraînement qui sont commandés pour déplacer sélectivement ladite pince (60) entre au moins :
- une position non-engagée dans laquelle ledit moule (12) est libre d'occuper la position ouverte et
- une position engagée dans laquelle au moins une partie de la pince (60) s'étend autour du moule (12) occupant sa position fermée.

9. Unité de moulage selon les revendications 3 et 8, **caractérisée en ce que** les leviers (62) de la pince (60) délimitent transversalement entre eux, en position écartée, une ouverture à l'avant qui est supérieure à l'encombrement des porte-moules (16) en position fermée de manière que chaque levier (62) présente transversalement par rapport au porte-moule (16) un jeu (j) déterminé grâce auquel la pince (60) en position écartée est susceptible d'être déplacée longitudinalement entre lesdites positions non-engagée et engagée sans entrer en contact avec les porte-moules (16).

10. Unité de moulage selon l'une quelconque des revendications 6 à 9, **caractérisée en ce que** lesdits leviers (62) de la pince (60) sont rappelés automatiquement par des moyens (65) de rappel élastique vers l'une des positions parmi lesdites positions écartée et serrée et **en ce que** les moyens (70) d'actionnement commandent le déplacement transversal des leviers (62) de la pince (60) vers l'autre position parmi lesdites positions écartée ou serrée de la pince.

11. Unité de moulage selon la revendication 8, **caractérisée en ce que** lesdits moyens d'entraînement en translation de la pince (60) entre lesdites positions non-engagée et engagée sont constitués par ledit mécanisme (30) de commande pour commander l'ouverture et la fermeture du moule (12).

12. Unité de moulage selon la revendication 11, **caractérisée en ce que** ledit mécanisme (30) comporte au moins un chariot (32) qui est monté mobile longitudinalement en translation relativement au châssis (11) de l'unité portant le moule (12) et relié audit châssis (11) par l'intermédiaire de moyens (34) coulissant, ledit chariot (32) étant commandé en déplacement par l'intermédiaire d'un dispositif (40) d'actionnement, respectivement entre une position reculée dans laquelle le moule (12) occupe ladite position ouverte et une position avancée dans laquelle le moule (12) occupe ladite position fermée.

13. Unité de moulage selon la revendication 12, **caractérisée en ce que** ledit dispositif (40) d'actionnement du chariot du mécanisme de commande de l'ouverture et de la fermeture du moule (12) est du type à came et à suiveur de came pour commander le coulissement du chariot (32) entre lesdites positions avancée et reculée.

14. Unité de moulage selon la revendication 12, **caractérisée en ce que** ledit dispositif (40) d'actionnement du chariot (32) du mécanisme (30) de commande de l'ouverture et de la fermeture du moule (12) comporte au moins un moteur linéaire.

15. Unité de moulage selon l'une des revendications 11 à 14, **caractérisée en ce que** chaque porte-moule (16) est relié audit chariot (32) par l'intermédiaire d'au moins une biellette (28) associée dont une extrémité avant est solidaire du porte-moule (16) et dont l'autre extrémité arrière est liée en déplacement au chariot (32) par des moyens (36, 38) d'accouplement.

16. Unité de moulage selon la revendication 15, **caractérisée en ce que** les moyens d'accouplement du type à came et à galet comportent, pour chacune des biellettes (28), au moins un galet (36) qui est solidaire de l'extrémité arrière de la biellette (28) et coopère avec une came (38) ménagée dans un support (35) solidaire en déplacement dudit chariot (32), de manière que le déplacement en translation du chariot (32) par le dispositif (40) d'actionnement entraîne simultanément celui de ladite came (38), laquelle came (38) parcourue par ledit galet (36) solidaire de la biellette (28) provoquant l'ouverture ou la fermeture du moule (12).

17. Unité de moulage selon la revendication 16, **caractérisée en ce que** ladite came (38) comporte au moins un premier tronçon (80) curviligne pour commander la fermeture ou l'ouverture du moule (12) et un deuxième tronçon (82) rectiligne pour autoriser le déplacement de la pince (60), relativement au moule (12) en position fermée, entre la position non-engagée et la position engagée.

18. Unité de moulage selon l'une des revendications 11 à 17, dans laquelle le moule (12) comporte un moule (22) du fond du récipient qui, complémentaire desdits éléments (14) de moulage, est monté mobile verticalement en translation entre au moins une position basse et une position haute par l'intermédiaire de moyens (26) d'entraînement associés,
**caractérisée en ce que** lesdits moyens (26) d'entrainement associés au moule (22) du fond sont liés en déplacement au chariot (32) du mécanisme (30) de commande de l'ouverture et de la fermeture du moule (12) par l'intermédiaire de moyens (44) de transmission de manière à commander de manière synchrone le déplacement du moule (22) du fond avec celui de l'ouverture et de la fermeture du moule (12).

19. Unité de moulage selon la revendication 16, **caractérisée en ce que** les moyens (44) de transmission comportent au moins une bielle (46) qui est montée mobile en rotation autour d'un axe (B) transversal qui, solidaire du châssis (11) de l'unité (10) de moulage, est agencé entre une première partie (48) et une deuxième partie (50) de la bielle (46), la première partie (48) de la bielle (46) étant reliée à un support (24) que comportent les moyens (26) d'entraînement du moule du fond, la deuxième partie (50) de la bielle (46) comportant un galet (56) qui coopère avec une came (58) complémentaire qui est liée en déplacement au chariot (32) du mécanisme (30).

## Patentansprüche

1. Formeinheit (10) zur Herstellung von Behältern anhand von Vorformlingen aus thermoplastischem Material, wobei die Formeinheit (10) mindestens umfasst:
- ein Gestell (11), das eine Form (12) trägt, die mindestens zwei Formelemente (14) umfasst, die jeweils in einem zugehörigen Formträger (16) eingebaut sind,
- wobei mindestens einer der Formträger (16) bezogen auf den anderen um eine vertikale Drehachse (0) drehbar zwischen einer geöffneten Position und einer geschlossenen Position der Form beweglich gelagert sind, wobei die Formelemente (14) durch jeweilige Auflageflächen (18) aneinander anliegen, die eine vertikale Trennebene (P) in Längsrichtung definieren und zusammen ein Formnest (20) begrenzen;
- Formmittel zum Einführen mindestens eines unter Druck stehenden Fluids in das Innere des Vorformlings zum Formen des entsprechenden Behälters in dem Formnest (20),
- einen Mechanismus (30) zum Steuern des Öffnens und des Schließens der Form (12), um die Bewegung von mindestens einem der Formträger (16) zwischen der geöffneten und der geschlossenen Position der Form zu steuern,
- und Kompensationsmittel (60), die selektiv gesteuert werden, um eine Kompensationskraft auszuüben, die die Formelemente (14) an der Trennebene (P) aneinanderdrücken und den Kräften, die das unter Druck stehende Fluid beim Formen eines Behälters aus einem Vorformling auf die Formelemente (14) ausübt, entgegenwirken soll,
**dadurch gekennzeichnet, dass** die Kompensationsmittel durch mindestens einen Greifer (60) gebildet sind, der auf die Formträger (16) wirkt, um sie in der geschlossenen Position der Formeinheit (10) aneinanderzudrücken und die Kompensationskraft auszuüben.

2. Formeinheit nach Anspruch 1, **dadurch gekennzeichnet, dass** die Kompensationskraft, die von dem Greifer (60) auf jeden der Formträger (16) ausgeübt wird, eine Andruckkraft ist, die gemäß einer mittleren Querebene ausgeübt wird, die zur Trennebene (P) orthogonal ist und durch die Hauptachse (A) der Form (12) hindurchläuft.

3. Formeinheit nach einem der Ansprüche 1 oder 2, **dadurch gekennzeichnet, dass** der Greifer (60) zwei Hebel (62) umfasst, wovon mindestens einer um Gelenkmittel (64) herum beweglich gelagert ist, jeweils zwischen mindestens einer gespreizten und einer zusammengedrückten Position, in der der Greifer (60) die Kompensationskraft auf die Formträger (16) ausübt, um sie aneinanderzudrücken, während die Form (12) die geschlossene Position einnimmt.

4. Formeinheit nach Anspruch 3, **dadurch gekennzeichnet, dass** die Gelenkmittel (64) des Greifers (60) in Längsrichtung auf dem mindestens einen Hebel (62) zwischen einem hinteren Abschnitt (66) und einem freien vorderen Abschnitt (68) angeordnet sind, der dazu bestimmt ist, die Kompensationskraft auszuüben, um einen Hebel des ersten Typs zu bilden.

5. Formeinheit nach Anspruch 4, **dadurch gekennzeichnet, dass** einer der Hebel (62) des Greifers (60) drehbar um einen vertikalen Drehpunkt (64) herum beweglich gelagert ist, und dadurch, dass der andere der Hebel (62) des Greifers (60) drehbar um einen anderen vertikalen Drehpunkt (64) herum beweglich gelagert ist, so dass die zwei Hebel (62) des Greifers (60) zwischen der gespreizten Position und der zusammengedrückten Position der Ausübung der Kompensationskraft beweglich gelagert sind.

6. Formeinheit nach einem der vorhergehenden Ansprüche, **dadurch gekennzeichnet, dass** die Einheit (10) Betätigungsmittel (70) umfasst, die mit dem Greifer (60) verbunden sind, die selektiv gesteuert werden, um eine bestimmte Kraft in Querrichtung auf die Hebel (62) des Greifers (60) auszuüben, um die Kompensationskraft zu erzielen.

7. Formeinheit nach Anspruch 6, **dadurch gekennzeichnet, dass** die Betätigungsmittel (70) mindestens einen Zylinder umfassen, wobei der Zylinder (70) einen Kolben (72) umfasst, der dichtend in einer Bohrung (74) eines Körpers (76) des Zylinders verschiebbar gelagert ist, wobei der Kolben (72) mit der Bohrung (74) mindestens einen Steuerraum (78) variablen Volumens begrenzt, der selektiv mit unter Druck stehendem Fluid versorgt werden kann.

8. Formeinheit nach einem der vorhergehenden Ansprüche, **dadurch gekennzeichnet, dass** der Greifer (60) in Längsrichtung translatorisch bezogen auf die Form (12) beweglich gelagert ist, wobei der Greifer (60) mit Antriebsmitteln beweglich verbunden ist, die gesteuert werden, um den Greifer (60) selektiv zu bewegen zwischen mindestens:
- einer Nichteingriffsposition, in der die Form (12) frei ist, die geöffnete Position einzunehmen, und
- einer Eingriffsposition, in der sich zumindest ein Abschnitt des Greifers (60) um die Form (12) herum erstreckt, die ihre geschlossene Position einnimmt.

9. Formeinheit nach den Ansprüchen 3 und 8, **dadurch gekennzeichnet, dass** die Hebel (62) des Greifers (60) in der gespreizten Position eine vordere Öffnung in Querrichtung zwischen sich begrenzen, die größer als der Platzbedarf der Formträger (16) in der geschlossenen Position ist, so dass jeder Hebel (62) in Querrichtung bezogen auf den Formträger (16) ein bestimmtes Spiel (j) aufweist, dank dessen der Greifer (60) in der gespreizten Position in Längsrichtung zwischen der Nichteingriffs- und der Eingriffsposition bewegt werden kann, ohne mit den Formträgern (16) in Kontakt zu kommen.

10. Formeinheit nach einem der Ansprüche 6 bis 9, **dadurch gekennzeichnet, dass** die Hebel (62) des Greifers (60) von elastischen Rückholmitteln (65) automatisch zu einer der Positionen von der gespreizten und der zusammengedrückten Position zurückgeholt werden, und dadurch, dass die Betätigungsmittel (70) die Querbewegung der Hebel (62) des Greifers (60) zu der anderen Position von der gespreizten und der zusammengedrückten Position steuern.

11. Formeinheit nach Anspruch 8, **dadurch gekennzeichnet, dass** die Mittel zum translatorischen Antreiben des Greifers (60) zwischen der Nichteingriffs- und der Eingriffsposition aus dem Steuermechanismus (30) zum Steuern des Öffnens und des Schließens der Form (12) gebildet sind.

12. Formeinheit nach Anspruch 11, **dadurch gekennzeichnet, dass** der Mechanismus (30) mindestens einen Schlitten (32) umfasst, der in Längsrichtung translatorisch bezogen auf das Gestell (11) der Einheit, die die Form (12) trägt, beweglich gelagert ist, und durch gleitende Mittel (34) mit dem Gestell (11) verbunden ist, wobei der Schlitten (32) mittels einer Betätigungsvorrichtung (40) in der Bewegung zwischen einer zurückgezogenen Position, in der die Form (12) die geöffnete Position einnimmt, bzw. einer vorgerückten Position, in der die Form (12) die geschlossene Position einnimmt, gesteuert wird.

13. Formeinheit nach Anspruch 12, **dadurch gekennzeichnet, dass** die Betätigungsvorrichtung (40) des Schlittens des Mechanismus zum Steuern des Öffnens und des Schließens der Form (12) vom Typ mit Nocken und mit Nockenfolger ist, um das Gleiten des Schlittens (32) zwischen der vorgerückten und der zurückgezogenen Position zu steuern.

14. Formeinheit nach Anspruch 12, **dadurch gekennzeichnet, dass** die Betätigungsvorrichtung (40) des Schlittens (32) des Mechanismus (30) zum Steuern des Öffnens und des Schließens der Form (12) mindestens einen Linearmotor umfasst.

15. Formeinheit nach einem der Ansprüche 11 bis 14, **dadurch gekennzeichnet, dass** jeder Formträger (16) mit dem Schlitten (32) über mindestens einen zugehörigen Schwingarm (28) verbunden ist, von dem ein vorderes Ende mit dem Formträger (16) fest verbunden ist und das andere hintere Ende durch Kopplungsmittel (36, 38) mit dem Schlitten (32) beweglich verbunden ist.

16. Formeinheit nach Anspruch 15, **dadurch gekennzeichnet, dass** die Kopplungsmittel des Typs mit Nocken und mit Rolle für jeden der Schwingarme (28) mindestens eine Rolle (36) umfassen, die mit dem hinteren Ende des Schwingarms (28) fest verbunden ist und mit einem Nocken (38) zusammenwirkt, der in einem Träger (35) angeordnet ist, der mit dem Schlitten (32) derart bewegungsverbunden ist, dass die translatorische Bewegung des Schlittens (32) durch die Betätigungsvorrichtung (40) gleichzeitig die des Nockens (38) zur Folge hat, wobei der Nocken (38), der von der Rolle (36) abgelaufen wird, die mit dem Schwingarm (28) fest verbunden ist, das Öffnen oder das Schließen der Form (12) verursacht.

17. Formeinheit nach Anspruch 16, **dadurch gekennzeichnet, dass** der Nocken (38) mindestens einen ersten krummlinigen Abschnitt (80) zum Steuern des Schließens oder des Öffnens der Form (12) und einen zweiten geradlinigen Abschnitt (82) zum Gestatten der Bewegung des Greifers (60) bezogen auf die Form (12) in der geschlossenen Position zwischen der Nichteingriffsposition und der Eingriffsposition umfasst.

18. Formeinheit nach einem der Ansprüche 11 bis 17, wobei die Form (12) eine Form (22) des Bodens des Behälters umfasst, welche, die Formelemente (14) ergänzend, vertikal translatorisch zwischen mindestens einer unteren Position und einer oberen Position durch zugehörige Antriebsmittel (26) beweglich gelagert ist, **dadurch gekennzeichnet, dass** die Antriebsmittel (26), die zu der Form (22) des Bodens gehören, mit dem Schlitten (32) des Mechanismus (30) zum Steuern des Öffnens und des Schließens der Form (12) durch Übertragungsmittel (44) beweglich verbunden sind, um die Bewegung der Form (22) des Bodens synchron mit der des Öffnens und des Schließens der Form (12) zu steuern.

19. Formeinheit nach Anspruch 16, **dadurch gekennzeichnet, dass** die Übertragungsmittel (44) mindestens eine Lenkstange (46) umfassen, die drehbar um eine Querachse (B) beweglich gelagert ist, die, fest mit dem Gestell (11) der Formeinheit (10) verbunden, zwischen einem ersten Abschnitt (48) und einem zweiten Abschnitt (50) der Lenkstange (46) angeordnet ist, wobei der erste Abschnitt (48) der Lenkstange (46) mit einem Träger (24) verbunden ist, den die Antriebsmittel (26) der Form des Bodens umfassen, wobei der zweite Abschnitt (50) der Lenkstange (46) eine Rolle (56) umfasst, die mit einem ergänzenden Nocken (58) zusammenwirkt, der mit dem Schlitten (32) des Mechanismus (30) beweglich verbunden ist.

## Claims

1. Moulding unit (10) for the manufacture of containers from preforms made of thermoplastic material, said moulding unit (10) comprising at least:
- a frame (11) carrying a mould (12) which comprises at least two moulding elements (14) each respectively mounted in an associated mould carrier (16),
- at least one of said mould carriers (16) being mounted so as to be movable in rotation with respect to the other about a vertical axis (0) of rotation between an open position and a closed position of the mould in which said moulding elements (14) are mated against one another by respective bearing faces (18) defining a vertical parting plane (P) of longitudinal orientation and together delimit a moulding cavity (20);
- forming means for introducing at least one pressurized fluid inside the preform with the aim of moulding the corresponding container in the cavity (20),
- a mechanism (30) for controlling the opening and the closing of the mould (12) in order to control the movement of at least one of the mould carriers (16) between said open and closed positions of the mould, and
- selectively controlled compensation means (60) for exerting a compensation force, tending to clamp the moulding elements (14) against one another at said parting plane (P) and to oppose the forces that the pressurized fluid exerts on the moulding elements (14) during the moulding of a container from a preform,
**characterized in that** said compensation means are formed by at least one gripper (60) which acts on the mould carriers (16) to clamp them against one another in the closed position of the moulding unit (10) and exert said compensation force.

2. Moulding unit according to Claim 1, **characterized in that** said compensation force exerted by the gripper (60) on each of the mould carriers (16) is a thrust force applied along a median transverse plane which is orthogonal to the parting plane (P) and which passes through the main axis (A) of the mould (12).

3. Moulding unit according to either of Claims 1 and 2, **characterized in that** said gripper (60) comprises two levers (62) at least one of which is mounted so as to be movable about articulation means (64) respectively between at least a separated position and a clamped position in which, with the mould (12) occupying said closed position, said gripper (60) exerts said compensation force on the mould carriers (16) in order to clamp them against one another.

4. Moulding unit according to Claim 3, **characterized in that** the articulation means (64) of the gripper (60) are arranged longitudinally on said at least one lever (62) between a rear part (66) and a free front part (68) intended to exert said compensation force so as to form a lever, namely a lever of the first class.

5. Moulding unit according to Claim 4, **characterized in that** one of the levers (62) of the gripper (60) is mounted so as to be movable in rotation about a vertical pivot (64), and **in that** the other of the levers (62) of the gripper (60) is mounted so as to be movable in rotation about another vertical pivot (64), with the result that the two levers (62) of the gripper (60) are mounted so as to be movable between the separated position and the clamped position for application of the compensation force.

6. Moulding unit according to one of the preceding claims, **characterized in that** said unit (10) comprises actuating means (70) associated with the gripper (60) which are selectively controlled in order to apply transversely a defined force on the levers (62) of the gripper (60) in order to obtain said compensation force.

7. Moulding unit according to Claim 6, **characterized in that** the actuating means (70) comprise at least one cylinder, said cylinder (70) comprising a piston (72) which is slidably mounted in a sealed manner in a bore (74) of a body (76) of the cylinder, said piston (72) delimiting with said bore (74) at least one variable-volume control chamber (78) able to be selectively supplied with pressurized fluid.

8. Moulding unit according to any one of the preceding claims, **characterized in that** the gripper (60) is mounted so as to be movable longitudinally in translation relative to the mould (12), the gripper (60) being connected in movement to drive means which are controlled to selectively move said gripper (60) between at least:
- a non-engaged position in which said mould (12) is free to occupy the open position, and
- an engaged position in which at least part of the gripper (60) extends around the mould (12) occupying its closed position.

9. Moulding unit according to Claims 3 and 8, **characterized in that** the levers (62) of the gripper (60) delimit transversely between them, in the separated position, an opening at the front which is larger than the space requirement of the mould carriers (16) in the closed position so that each lever (62) has transversely with respect to the mould carrier (16) a defined play (j) by means of which the gripper (60) in the separated position is able to be moved longitudinally between said non-engaged and engaged positions without coming into contact with the mould carriers (16).

10. Moulding unit according to any one of Claims 6 to 9, **characterized in that** said levers (62) of the gripper (60) are returned automatically by elastic return means (65) towards one of the positions among said separated and clamped positions, and **in that** the actuating means (70) control the transverse movement of the levers (62) of the gripper (60) towards the other position among said separated or clamped positions of the gripper.

11. Moulding unit according to Claim 8, **characterized in that** said means for translationally driving the gripper (60) between said non-engaged and engaged positions are formed by said control mechanism (30) for controlling the opening and the closing of the mould (12).

12. Moulding unit according to Claim 11, **characterized in that** said mechanism (30) comprises at least one carriage (32) which is mounted so as to be movable longitudinally in translation relative to the frame (11) of the unit carrying the mould (12) and connected to said frame (11) via sliding means (34), said carriage (32) being controlled in movement via an actuating device (40), respectively between a retreated position in which the mould (12) occupies said open position and an advanced position in which the mould (12) occupies said closed position.

13. Moulding unit according to Claim 12, **characterized in that** said device (40) for actuating the carriage of the mechanism for controlling the opening and the closing of the mould (12) is of the cam and cam follower type for controlling the sliding of the carriage (32) between said advanced and retreated positions.

14. Moulding unit according to Claim 12, **characterized in that** said device (40) for actuating the carriage (32) of the mechanism (30) for controlling the opening and the closing of the mould (12) comprises at least one linear motor.

15. Moulding unit according to one of Claims 11 to 14, **characterized in that** each mould carrier (16) is connected to said carriage (32) via at least one associated link rod (28) of which a front end is secured to the mould carrier (16) and of which the other rear end is connected in movement to the carriage (32) by coupling means (36, 38).

16. Moulding unit according to Claim 15, **characterized in that** the coupling means of the cam and roller type comprise, for each of the link rods (28), at least one roller (36) which is secured to the rear end of the link rod (28) and cooperates with a cam (38) formed in a support (35) coupled in movement to said carriage (32), so that the translational movement of the carriage (32) by the actuating device (40) simultaneously drives that of said cam (38), which cam (38), travelled over by said roller (36) secured to the link rod (28), causing the opening or the closing of the mould (12).

17. Moulding unit according to Claim 16, **characterized in that** said cam (38) comprises at least a first curvilinear section (80) for controlling the closing or the opening of the mould (12) and a second rectilinear section (82) for allowing the movement of the gripper (60), relative to the mould (12) in the closed position, between the non-engaged position and the engaged position.

18. Moulding unit according to one of Claims 11 to 17, in which the mould (12) comprises a mould (22) for the bottom of the container which, complementary with said moulding elements (14), is mounted so as to be movable vertically in translation between at least a bottom position and a top position via associated drive means (26),
**characterized in that** said drive means (26) associated with the mould (22) for the bottom are connected in movement to the carriage (32) of the mechanism (30) for controlling the opening and the closing of the mould (12) via transmission means (44) so as to control in a synchronous manner the movement of the mould (22) for the bottom with that of the opening and the closing of the mould (12).

19. Moulding unit according to Claim 16, **characterized in that** the transmission means (44) comprise at least one connecting rod (46) which is mounted so as to be movable in rotation about a transverse axis (B) defined by a shaft which, secured to the frame (11) of the moulding unit (10), is arranged between a first part (48) and a second part (50) of the connecting rod (46), the first part (48) of the connecting rod (46) being connected to a support (24) belonging to the means (26) for driving the mould for the bottom, the second part (50) of the link rod (46) comprising a roller (56) which cooperates with a complementary cam (58) which is connected in movement to the carriage (32) of the mechanism (30).
